# EUROPEAN PATENT APPLICATION

(11) **EP 1 146 067 A1**
(43) Date of publication of application: **17.10.2001**
(21) Application number: 99961412.6
(22) Date of filing: 27.12.1999
(51) Int. Cl.: C08J 3/24, C08G 73/10

(54) **PROCESS AND APPARATUS FOR CONTINUOUS PRODUCTION OF CROSSLINKED POLYMER**

(30) Priority: 25.12.1998 JP 36997298; 25.12.1998 JP 36997498
(71) Applicant: Mitsui Chemicals, Inc., Tokyo 100-6070 (JP)
(72) Inventor: MACHIDA, Katsuhiko, Ichihara-shi, Chiba 299-0125 (JP); FUKAWA, Susumu, Hiratsuka-shi, Kanagawa 254-0802 (JP); FUJIMORI, Yasuko, Ichihara-shi, Chiba 299-0124 (JP); OGAWA, Shinji, Yokohama-shi, Kanagawa 222-0031 (JP); KATOH, Toshio, Kawaguchi-shi, Saitama 333-0866 (JP); SUKEGAWA, Makoto, Yokohama-shi, Kanagawa 227-0067 (JP); IRIZATO, Yoshihiro, Ichihara-shi, Chiba 299-0125 (JP)
(74) Representative: Strehl Schübel-Hopf & Partner
(86) International application number: JP9907330
(87) International publication number: WO0039197

(57) **Abstract**

A continuous production process for a cross-linked polymer is disclosed. The process comprises the following steps: continuously mixing an uncross-linked polymer, which has been fed in a liquid form through a feed line (line A), and a cross-linking agent, which has been fed in a liquid form through another feed line (line B), together at a mixing junction (M) such that the uncross-linked polymer is allowed to continuously undergo a cross-linking reaction; and continuously discharging and collecting the resulting cross-linking reaction product as the cross-linked polymer through a discharge line (line C). Also disclosed is a production apparatus having such feed lines, mixing junction and discharge line. According to these production process and apparatus, cross-linked polymers each of which can achieve high water absorption can be continuously produced with high productivity.

## Description

### TECHNICAL FIELD

This invention relates to a continuous production process for cross-linked polymers, and also to a continuous production apparatus for cross-linked polymers, which is suitable for use in practicing the production process. Preferred examples of the cross-linked polymers can include, but are not particularly limited to, cross-linked polyaspartic acid resins and their precursors (intermediates), that is, cross-linked polysuccinimides.

The cross-linked polymer production process and apparatus according to the present invention are excellent, for example, in the volumetric efficiency of each production step, are superb in that the production is continuous, and can provide cross-linked polymers with high productivity.

A production process and apparatus for cross-linked polyaspartic acid resins or cross-linked polysuccinimides, which are typical embodiments of the present invention, can provide not only superabsorbent resins and the like having degradability and/or biodegradability with high productivity but also superabsorbent resins having outstanding water absorbency.

### BACKGROUND ART

A description will be made about the conventional art on the production process and apparatus for cross-linked polyaspartic acid resins or cross-linked polysuccinimides, which are the typical embodiments of the. present invention.

A cross-linked superabsorbent resin is a resin capable of absorbing water from several tens of times to several thousands of times as much its own weight. Such cross-linked superabsorbent resin are used in a wide variety of fields such as sanitary products such as disposable diapers, sanitary supplies, breast milk pads, and disposable dustcloths; medical supplies such as wound-protecting dressing materials, medical underpads, and cataplasms; daily necessaries such as pet sheets, portable toilets, gel-type aromatics, gel-type deodorants, sweat-absorbing fibers, and disposable pocket heaters; toiletry products such as shampoos, hair-setting gels, and humectants; agricultural and horticultural products such as agricultural and horticultural water-holding materials; life extenders for cut flowers, floral foams (fixing bases for cut flowers), seedling nursery beds, solution culture vegetation sheets, seed tapes, fluidized seedling media, and dew-preventing agricultural sheets; food packaging materials such as freshness-retaining materials for food trays, and drip absorbent sheets; materials for use during transportation, such as cold insulators, and water absorbent sheets for use during the transportation of fresh vegetables; construction and civil engineering materials such as dew-preventing construction materials, sealing materials for civil engineering and construction, lost circulation preventives for shield tunneling, concrete admixtures, gaskets and packings; materials for electric and electronic equipment, such as sealing materials for fiber optics and electronic equipment, waterblocking materials for communication cables, and ink jet recording papers; water treatment materials, such as sludge solidifiers, and dehydrating or water-eliminating agents for gasoline and oils; textile-printing sizing materials; water-swelling toys; and artificial snow. Using their sustained-release property of chemicals, applications such as sustained-release fertilizers, sustained-release agrichemicals and sustained-release drugs are expected. Further, using their hydrophilicity, their application as humidity-regulating materials is expected; and using their charge-holding property, their application as antistatic agents is also expected.

However, it is primarily acrylate-based, cross-linked superabsorbent resins that have heretofore been used for the above-mentioned applications. As acrylate-based, cross-linked superabsorbent resins practically have no biodegradability, they are indicated to involve a potential problem in that they may become causes for various environmental problems when they are disposed of after use.

Biodegradable resins are, therefore, attracting interests in recent years, and as replacements for conventional non-biodegradable resins, use of resins having biodegradability has also been proposed in cross-linked superabsorbent resins. As an example, resins each of which can be obtained by cross-linking a polyamino acid are attracting interests. Polyamino acid resins have biodegradability and are thus compatible with the global environment. Even when absorbed in the body, they are digested and absorbed by enzymatic action and moreover, they do not exhibit antigenecity in the body and their metabolites are free of toxicity. These resins are accordingly materials which are also safe for human beings.

As a disclosed example of such a resin, a process for the production of a polymer having high water-absorbency, which comprises irradiating γ rays to poly-γ-glutamic acid, was reported by Kunioka et al. in KOBUNSHI RONBUNSHU (The Journal of the Society of Polymer Science, Japan), 50(10), 755 (1993). From an industrial viewpoint, however, a ⁶⁰Co irradiation system for use in this technology requires considerable equipment for shielding radiation, and sufficient care is also required for its control. This technology is therefore not practical.

In addition, a process for obtaining a hydrogel by cross-linking an acidic amino acid was reported by Akamatsu et al. in JP 52-41309 B (corres. U.S. Pat. No. 3,948,863). Further, use of cross-linked amino acid resins as superabsorbent polymers was reported by Sikes et al. in JP PCT 6-506244 A (corres. PCT Int. Publn. WO92/172525). However, those resins were not sufficient in water absorbency and saline absorbency and were not practically usable.

As a process for the production of a cross-linked polyaspartic acid, it has been disclosed to produce a cross-linked polysuccinimide from a polysuccinimide solution and a cross-linking agent and then to hydrolyze its imide rings [JP 7-224163 A (corres. U.S. Pat. No. 5,461,085)]. This production process can provide high water absorbency and yield but on the other hand, is accompanied by a problem in that, when a cross-linking reaction is conducted in a stirred tank, bulk gelation takes place in the stirred tank as the cross-linking reaction proceeds, thereby making it impossible to continue stirring or in that the productivity is very low. due to deposition or the like of the product on an inner wall of a reactor. Such bulk gelation prevents practice of continuous production which is an industrially preferred embodiment, so that the cross-linked polyaspartic acid can hardly be produced with excellent productivity. Further, the designing of an apparatus was also very difficult because loose gel is formed with'greater volume as the scale of the apparatus increases.

Also disclosed is a process in which with a view to overcoming these problems, cross-linking of a polysuccinimide is conducted by adding a solvent, which is poor for the polysuccinimide, to the system [JP 9-169840]. Although this process has a merit in that bulk gelation can be prevented and continuous production is hence feasible, it involves at least the following problems (1) to (5):
(1) Use of the poor solvent in a large amount makes it impossible to conduct the cross-linking reaction in a fully homogeneous state and therefore, leads to a superabsorbent resin lower in performance and/or yield than that available from practice of the cross-linking reaction in a state of good homogeneity.
(2) Use of the poor solvent in a large amount leads to a reduction in volumetric efficiency, although bulk gelation can be prevented.
(3) Use of the poor solvent in a large amount requires a large apparatus, because due to a low concentration of the uncross-linked reactant, the progress of the cross-linking reaction is slow and long time is hence needed for the cross-linking reaction.
(4) Use of the poor solvent in a small amount results in a cross-linking reaction mixture of higher viscosity, thereby making it difficult to continue stirring.
(5) Localized bulk gelation takes place unless the poor solvent is added in a proper amount or stirring is sufficient.

### DISCLOSURE OF THE INVENTION

An object of the present invention is to provide a continuous production process and apparatus for a cross-linked polymer, which can solve the above-mentioned problems of the conventional art.

Preferred examples of the cross-linked polymers can include, but are not particularly limited to, cross-linked. polyaspartic acid resins and their precursors (intermediates), that is, cross-linked polysuccinimides.

In more detail, an object of the present invention is to provide a continuous production process and apparatus for a cross-linked polymer, which are excellent in the volumetric efficiency of each production step, are superb in that the production is continuous, and can produce a cross-linked polymer with high productivity. Still more specifically, the object of the present invention is to provide a continuous production process and apparatus for a cross-linked polyaspartic acid resin, which is a superabsorbent resin having degradability and/or biodegradability, or a cross-linked polysuccinimide as a precursor (intermediate) for the cross-linked polyaspartic acid resin, which can produce the cross-linked polyaspartic acid resin or the cross-linked polysuccinimide with high productivity.

Another object of the present invention is to provide a production process and apparatus, which can be used with high productivity for the production of a cross-linked reaction product in desired one of various forms, including a gel form and the like, with high productivity, for example, which can produce a cross-linked polyaspartic acid base with high productivity.

A further object of the present invention is to provide a production process and apparatus for a superabsorbent resin, such as a polyaspartic acid resin or the like having outstanding water absorbency, or for a cross-linked polysuccinimide as a precursor (intermediate) for the polyaspartic acid resin.

With a view to achieving the above-described object, the present inventors have proceeded with an extensive investigation. As a result, it has been found that upon production of a cross-linked polyaspartic acid resin capable of achieving high water absorption, practice of its cross-linking reaction by use of specific lines A to C makes it possible to get along with a cross-linked reaction product in desired one of various forms, including a gel form which has heretofore been a form to be avoided, and that the cross-linked polyaspartic acid resin can be produced with high productivity, leading to the completion of the present invention.

The present invention, therefore, provides a continuous production process for a cross-linked polymer, including mixing an uncross-linked polymer and a cross-linking agent together and conducting a cross-linking reaction, which comprises the following steps: continuously mixing said uncross-linked polymer, which has been fed in a liquid form through a feed line (line A), and said cross-linking agent, which has been fed in a liquid form through another feed line (line B), together at a mixing junction (M) such that said uncross-linked polymer is allowed to continuously undergo said cross-linking reaction; and continuously discharging and collecting the resulting cross-linking reaction product as said cross-linked polymer through a discharge line (line C).

The present invention also provides a continuous production apparatus for a cross-linked polymer, which comprises a feed line (line A) for feeding an uncross-linked polymer in a liquid form, another feed line (line B) for feeding a cross-linking agent in a liquid form, a mixing junction (M) and a discharge line (line C) for discharging said cross-linked polymer, wherein said mixing junction has a function to continuously mix said uncross-linked polymer, which has been fed in said liquid form through said feed line (line A), and said cross-linking agent, which has been fed in said liquid form through said another feed line (line B), together such that a cross-linking reaction is continuously conducted, and said discharge line (line C) has a function to continuously discharge and collect the resulting cross-linking reaction product as said cross-linked polymer.

### BRIEF DESCRIPTION OF THE DRAWING

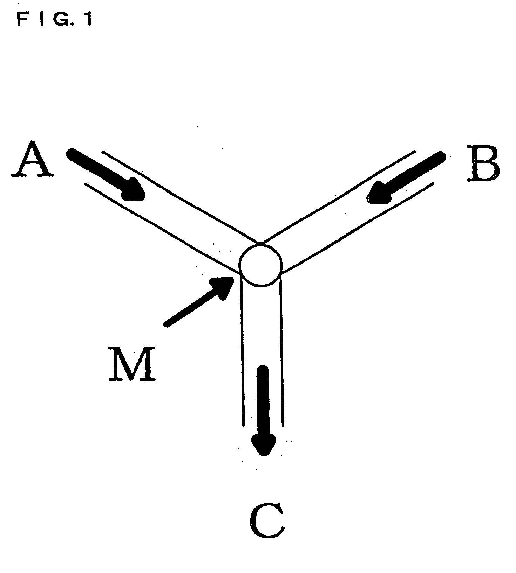

FIG. 1 illustrates a basic concept of the continuous production process and apparatus of the present invention for the cross-lined polymer.

### BEST MODES FOR CARRYING OUT THE INVENTION

A description will hereinafter be made about production processes and apparatus for cross-linked polyaspartic acid resins or cross-linked polysuccinimides, which are typical embodiments of the present invention. The following description, however, should not be relied upon as a basis for narrowly interpreting the term "cross-linked polymer" as used herein only as a "cross-linked polyaspartic acid resin" or a "cross-linked polysuccinimide".

### [Cross-linked polymer, and uncross-linked polymer]

The term "cross-linked polymer" as used herein means a polymer having a cross-linked structure formed by reacting a cross-linking agent to at least a part of an uncross-linked polymer. This uncross-linked polymer is preferably a hydrophilic polymer, with a water-soluble polymer being more preferred. As the uncross-linked polymer in the present invention, a superabsorbent polymer and/or a superabsorbent polymer precursor is preferred, and an uncross-linked polyamino acid derivative is also preferred. It is to be noted that the term "uncross-linked polyamino acid derivative" encompasses uncross-linked polysuccinimides in its concept.

The cross-linked polymer in the present invention is preferably a hydrophilic cross-linked polymer, with a water-insoluble polymer being more preferred. As the hydrophilic cross-linked polymer in the present invention, a superabsorbent polymer and/or a superabsorbent polymer precursor is preferred. It is to be noted that the term "superabsorbent polymer precursor" encompasses cross-linked polysuccinimides in its concept and that the term "superabsorbent polymer" embraces cross-linked polyaspartic "acids in its concept.

Further, the cross-linked polymer in the present invention is preferably a cross-linked polyamino acid derivative. It is to be noted that the term "cross-linked polyamino acid derivative" includes cross-linked polysuccinimides and cross-linked polyaspartic acids.

Described specifically, preferred embodiments of the cross-linked polymer according to the present invention can include cross-linked polyaspartic acid resins and cross-linked polysuccinimides. Preferred embodiments of the uncrosslinked polymer, on the other hand, can include polysuccinimides.

### [Cross-linked polyaspartic acid resin]

A description will be made about a cross-linked polyaspartic acid resin which is a specific example of the cross-linked polymer in the present invention. Roughly dividing the cross-linked polyaspartic acid resin in structure, it is composed of a backbone basic skeleton part, side chain parts and cross-linked parts. These parts will hereinafter be described under (1)-(3).

### (1) Structure of the backbone basic skeleton of the cross-linked polyaspartic acid resin

Recurring units of the backbone basic skeleton of the cross-linked polyaspartic acid resin produced in the present invention may each be formed of an aspartic acid residual group alone or of a copolymer of aspartic acid and an amino acid other than aspartic acid. It is to be noted that in the present invention, recurring units formed of aspartic acid in a polymer are called "aspartic acid residual groups" irrespective of the type of bonding.

Specific examples of the amino acid other than aspartic acid can include amino acids and amino acid derivatives - such as 19 types of indispensable amino acids other than aspartic acid, L-ornithine, a series of α-amino acids, β-alanine, γ-aminobutyric acid, neutral amino acids, acidic amino acids, ω-esters of acidic amino acids, basic amino acids, N-substituted derivatives of basic amino acids, aspartic acid-L-phenylalanine dimer (aspartame); and aminosulfonic acids such as L-cysteic acid. Each α-amino acid may be in the form of either an optically active substance (L-form or D-form) or a racemic modification.

When the recurring units of the backbone basic skeleton are composed of a copolymer, the copolymer can be any one of a block copolymer, a random copolymer and a graft copolymer.

No particular limitation is imposed on the number of recurring units each of which is composed of an aspartic acid residual group, but the recurring units of the aspartic acid residual groups may account generally for 1 mol.% or more, preferably for 10 mol.% or more based on the total number of recurring units which make up the molecule.

The recurring units of the backbone basic skeleton of the cross-linked polyaspartic acid resin may preferably formed of aspartic acid residual groups alone or of a copolymer of aspartic acid and glutamic acid or lysine from the standpoint of providing the resin with high water absorbency. From the standpoint of industrial production, it is particularly preferred that the recurring units are formed of aspartic acid residual groups alone.

In the backbone basic skeleton of polyaspartic acid, amide bonds in the backbone may be either α-bonds or β-bonds. In the case of polyaspartic acid or its copolymer, an amide bond is an α-bond where an amino group or the like in aspartic acid or a copolymer unit is bonded with the α-carboxyl group of aspartic acid, but an amide bond is a β-bond where an amino group or the like in aspartic acid or a copolymer unit is bonded with the β-carboxyl group of aspartic acid. In this polyaspartic acid, such α-bonds and β-bonds are generally found together. No particular limitation is imposed on the manner of bonding.

The side chain parts and cross-linked parts of the polymer are basically formed of a carboxylic acid derivative which has been obtained by substituting carboxyl groups of polyaspartic acid. Details of these side chain parts and cross-linked parts will hereinafter be described.

### (2) Structure of the side chain parts of the cross-linked polyaspartic acid resin

The side chain parts of the cross-linked polyaspartic acid resin have a structure, which has been formed by hydrolytically opening an imide ring of the cross-linked polysuccinimide and contains a carboxyl group formed by the hydrolysis. The cross-linked polyaspartic acid resin may also contain side chain parts each of which contains one or more other substituent groups. Examples of such other substituent groups can include, but are not particularly limited to, pendant groups containing one or more of hydroxyl, amino, mercapto, carboxyl, sulfonic, phosphonic, alkyl, aryl and aralkyl groups. Further, such pendant groups may be alkyl, aralkyl and/or aryl groups having no specific substituent group or groups. These pendant groups are bonded with polyaspartic acid residual groups, preferably via an amide bond, an ester bond, a thioester bond or the like.

The carboxyl groups formed by the hydrolysis may each be either in a free form or in the form of a salt. Specific examples of ions capable of forming salts can include metal ions such as sodium, potassium and lithium ions; ammonium ions such as ammonium, tetramethylammonium, tetraethylammonium, tetrapropylammonium, tetrabutylammonium, tetrapentylammonium tetrahexylammonium ethyltrimethylammonium, trimethylpropyl-ammonium, butyltrimethylammonium, pentyltrimethylammonium, hexyltrimethylammonium, cyclohexyltrimethylammonium, benzyltrimethylammonium, triethylpropylammonium, triethylbutylammonium, triethylpentylammonium, triethylhexylammonium, cyclohexyltriethylammonium, and benzyltriethylammonium ions; and amine ions such as trimethylamine, triethylamine, tripropylamine, tributylamine, tripentylamine, trihexylamine, triethanolamine, tripropanolamine, tributanolamine, tripentanolamine, trihexanolamine, dimethylamine, diethyl-amine, dipropylamine, dibutylamine, dipentylamine, dihexyl-amine, dicyclohexylamine, dibenzylamine, ethylmethylamine, methypropylamine, butylmethylamine, methylpentylamine, methylhexylamine, methylamine, ethylamine, propylamine, butylamine, pentylamine, hexylamine, octylamine, decylamine, dodecylamine, and hexadecylamine ions.

The smaller the atomic weight or molecular weight of ions, the more preferred, because ions with a greater atomic weight or molecular weight correspondingly result in a greater molecular weight per monomer unit and hence in a smaller water absorption per unit. Further, when there is possibility of coming into contact with the human skin or the like, ions with either no or lower toxicity is preferred. Among the above-exemplified ions, use of sodium, potassium, lithium, ammonium or triethanolamine ions are preferred from these standpoints, with use of sodium or potassium ions being particularly preferred.

### (3) Structure of the cross-linked parts of the cross-linked polyaspartic acid resin

Concerning the cross-linked portion in the cross-linked polyaspartic acid resin, no particular limitation is imposed on their molecular structure. The cross-linked portions in the cross-linked polyaspartic acid resin can be discussed by dividing them into "bond portions" to the basic skeleton of the polymer backbone and "linkage portions" which cross-link these bond portions together.

No particular limitation is imposed on the "linkage portions" in the cross-linked parts of the cross-linked polyaspartic acid resin. Their specific examples can include structures formed of amide bonds, ester bonds or thioester bonds These types of structures may be contained either singly or in combination.

On the other hand, no particular limitation is imposed on the "linkage portions" in the cross-linked parts of the cross-linked polyaspartic acid resin. The linkage portions may be either substituted by substituent groups or unsubstituted. Illustrative of such substituent groups are linear or branched alkyl groups having 1 to 18 carbon atoms, cycloalkyl groups having 3 to 8 carbon atoms, aralkyl groups, substituted or unsubstituted phenyl groups, substituted or unsubstituted naphthyl groups, linear or branched alkoxy groups having 1 to 18 carbon atoms, aralkyloxy groups, phenylthio groups, linear or branched alkylthio groups having 1 to 18 carbon atoms, linear or branched alkylamino groups having 1 to 18 carbon atoms, linear or branched dialkylamino groups in which each of the alkyl groups has 1 to 18 carbon atoms, linear or branched trialkylammonium groups in which each of the alkyl groups has 1 to 18 carbon atoms, hydroxyl group, amino group, mercapto group, carboxyl group, sulfonic and phosphonic groups and salts thereof, alkoxycarbonyl groups, and alkylcarbonyloxy groups.

Examples can include alkyl groups such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl and octadecyl; cycloalkyl groups such as cyclopropyl, cyclobutyl, cyclopentyl, cyclohexyl, cycloheptyl and cyclo-octyl; aralkyl groups such as benzyl, phenylethyl, phenylpropyl and phenylbutyl; phenyl groups such as phenyl, tolyl, xylyl, chlorophenyl and biphenyl; naphthyl groups such as naphthyl and methylnaphthyl; alkoxy groups such as methoxy, ethoxy, propoxy, butoxy, pentyloxy, hexyloxy, heptyloxy, octyloxy, decyloxy, undecyloxy, dodecyloxy, tridecyloxy, tetradecyloxy, penta-decyloxy, hexadecyloxy, heptyldecyloxy and octyldecyloxy; aralkyloxy groups such as phenoxy, benzyloxy and tolyloxy; alkylthio groups such as methylthio, ethylthio, propylthio, butylthio, pentylthio, hexylthio, heptylthio, octylthio, nonylthio, decylthio, undecylthio, dodecylthio, tridecylthio, tetradecylthio, pentadecylthio, hexadecylthio, heptyldecyl-thio and octyldecylthio; aralkylthio groups such as phenylthio, benzylthio and tolylthio; alkylamino groups such as methylamino, ethylamino, propylamino, butylamino, pentylamino hexylamino, heptylamino, octylamino, nonylamino, decylamino, undecylamino, dodecylamino, tridecylamino, tetradecylamino, pentadecylamino, hexadecylamino, heptyl-decylamino and octyldecylamino; dialkylamino groups such as dimethylamino, diethylamino, dipropylamino, dibutylamino, dipentylamino dihexylamino, diheptylamino, dioctylamino, dinonylamino, didecylamino, diundecylamino, didodecylamino, ditridecylamino, ditetradecylamino, dipentadecylamino, dihexadecylamino, diheptyldecylamino, dioctyldecylamino, ethylmethylamino and methylpropylamino; trialkylammonium groups such as trimethylammonium, triethylammonium tri-propylammonium, tributylammonium, tripentylammonium, tri-hexylammonium, triheptylammonium, trioctylammonium, tri-nonylammonium, tridecylammonium, triundecylammonium, tridodecylammonium, tritetradecylammonium, tripenta-decylammonium, trihexadecyl-ammonium, triheptyldecyl-ammonium, trioctyldecylammonium dimethylethylammonium, dimethylbenzylammonium and methyl-dibenzylammonium; hydroxyl; amino; mercapto; carboxyl; sulfonic and phosphonic, and salts thereof; alkyloxycarbonyl groups such as methyloxycarbonyl, ethyloxycarbonyl, propyloxycarbonyl, butyloxycarbonyl, pentyloxycarbonyl, hexyloxycarbonyl, heptyloxycarbonyl, octyloxycarbonyl, nonyloxycarbonyl, decyloxycarbonyl, undecyloxycarbonyl, dodecyloxycarbonyl, tridecyloxycarbonyl, tetradecyloxy-carbonyl, pentadecyloxycarbonyl, hexadecyloxycarbonyl, heptadecyloxycarbonyl and octadecyloxycarbonyl; and alkyl-carbonyloxy groups such as methylcarbonyloxy, ethyl-carbonyloxy, propylcarbonyloxy, butylcarbonyloxy, pentyl-carbonyloxy, hexylcarbonyloxy, heptylcarbonyloxy, octyl-carbonyloxy, nonylcarbonyloxy, decylcarbonyloxy, undecyl-carbonyloxy, dodecylcarbonyloxy, tridecylcarbonyloxy, tetradecylcarbonyloxy, pentadecyl-carbonyloxy, hexadecyl-carbonyloxy, heptadecylcarbonyloxy and octadecylcarbonyloxy.

Among these, selection of substituent groups having lower molecular weight is preferred, because selection of substituent groups having ions having higher molecular weight correspondingly results in recurring units having higher molecular weight and hence in a smaller water absorption per unit weight. In general, it is also preferred to select substituent groups which do not render the production steps complex. Preferred examples can, therefore, include unsubstituted groups or groups substituted by one or more substituent groups (for example, methyl, ethyl, methoxy, methyloxycarbonyl and/or methylcarbonyloxy groups; and/or hydroxyl, amino, mercapto, carboxyl, and/or sulfonic and/or phosphonic and/or salts thereof).

When the cross-linked polyaspartic acid resin is used for application as a water-holding material, it is preferred to contain polar groups in the resin molecule. As the cross-linked parts, those containing polar groups in unsubstituted forms or those substituted by substituent groups containing polar groups (for example, hydroxyl groups, amino groups, mercapto groups, carboxyl groups, and/or sulfonic groups and phosphonic groups and/or salts thereof) are therefore particularly preferred.

### [Cross-linked polysuccinimide]

The cross-linked polysuccinimide in the present invention is a copolymer, which preferably has a structure corresponding to the basic skeleton of the above-described cross-linked polyaspartic acid resin and/or a precursor structure corresponding to the basic skeleton of the above-described cross-linked polyaspartic acid resin.

### [Polysuccinimide]

The polysuccinimide for use in the present invention may be either one having a linear structure or one having a branched structure.

The polysuccinimide may also be a copolymer, which preferably has a structure corresponding to the backbone basic skeleton of the above-described cross-linked polyaspartic acid resin and/or a precursor structure corresponding to the backbone basic skeleton of the above-described cross-linked polyaspartic acid resin.

No particular limitation is imposed on the production process of the polysuccinimide for use in the present invention. As a specific example, the process reported by P. Neri et al. in Journal of Medicinal Chemistry, **16**(8), 1973 can be mentioned. Although no particular limitation is imposed on the weight average molecular weight of the polysuccinimide, a higher weight average molecular weight generally leads to higher performance when employed as a superabsorbent or a water-holding material. The weight average molecular weight is generally 30,000 or higher, preferably 50,000 or higher, more preferably 70,000 or higher, particularly preferably 80,000 or higher, most preferably 90,000 or higher. It is preferred for the polysuccinimide to contain impurities (for example, an acid catalyst and the like) at low levels, with impurity contents of 0 wt.% being more preferred.

### [Cross-linking agent]

No particular limitation is imposed on the cross-linking agent for use in the present invention insofar as it is a polyfunctional compound capable of reacting with at least a part of the uncross-linked polymer to form cross-linking structures. When the uncross-linked polymer is a polysuccinimide, for example, a polyfunctional compound which reacts with at least some of imide ring portions is used as a cross-linking agent.

Illustrative are polyfunctional compounds such as polyamines and polythiols. Concrete examples can include aliphatic polyamines such as hydrazine, ethylenediamine, propylenediamine, 1,4-butanediamine, pentamethylenediamine, hexamethylenediamine, heptamethylenediamine, octamethylene-diamine, nonamethylenediamine, decamethylene-diamine, undecamethylenediamine, dodecamethylenediamine, tetradecamethylenediamine, hexadecamethylenediamine, 1-amino-2,2-bis(aminomethyl)butane, tetraaminomethane, diethylenetriamine and triethylenetetramine; alicyclic polyamines such as norbornenediamine, 1,4-diaminocyclohexane, 1,3,5-triaminocyclohexane and isophoronediamine; aromatic polyamines such as phenylenediamine, tolylenediamine and xylylenediamine; polyamines such as basic amino acids and esters thereof, compounds formed as a result of bonding of one or more molecules of monoamino compounds through one or more disulfide bonds, such as cystamine, and derivatives thereof; aliphatic polythiols such as 1,2-ethanedithiol, 1,3-propanedithiol, 1,4-butanedithiol, 1,6-hexanedithiols and pentaerythrithiol; alicyclic polythiols such as cyclohexanedithol; aromatic polythiols such as xylylene-dithiol, benzenedithiol and toluenedithiol; and esters such as trimethylolpropane tris (thioglycolate), trimethylolpropane tris (3-mercaptopropionate), pentaerythritol tetrakis (thioglycolate), and pentaerythritol tetrakis (3-mercaptopropionate)polythiols. Further, protein constituent amino acids led by lysine, cystine and ornithine and their salts and esters can also be mentioned.

Among these, preferred cross-linking agents are those having less odor and high reactivity with the imide rings of the polysuccinimide, that is, ethylenediamine, propylenediamine, 1,4-butanediamine, heptamethylenediamine, hexamethylenediamine, lysine, ornithine, and cystamine.

### [Liquid uncross-linked polymer]

As the liquid uncross-linked polymer in the present. invention, (1) a solution with at least a portion of the uncross-linked polymer dissolved in a solvent, (2) a dispersion with the uncross-linked polymer dispersed in a solvent or (3) a melt of the uncross-linked polymer, the temperature of which is equal to or higher than the melting point of the uncross-linked polymer, can be used preferably.

Although no particular limitation is imposed on the concentration of the uncross-linked polymer in such a solution, dispersion or melt, the concentration, in general, may range preferably from 1 to 100 wt.%, more preferably from 5 to 80 wt.%, particularly preferably from 10 to 60 wt.%, most preferably from 15 to 50 wt.%. It is preferred to use the uncross-linked polymer by adjusting its concentration within this range in view of the mixing readiness with the liquid cross-linking agent. Incidentally, the concentration of 100 wt.% means that the uncross-linked polymer, which has a temperature equal to or higher than its melting point and is in a liquid form, is used as is without diluting it with a solvent or the like.

In the present invention, no particular limitation is imposed on an apparatus which is used to produce the liquid uncross-linked polymer. As an apparatus for producing the liquid uncross-linked polymer, it is possible to employ a stirred tank, a kneader, a single-shaft or twin-shaft kneader, or the like.

### (1) Solution with at least a portion of the uncross-linked polymer dissolved in a solvent

A solution with at least a portion of the uncross-linked polymer dissolved in a solvent can be obtained by using a good solvent for the uncross-linked polymer or a good solvent and poor solvent for the uncross-linked polymer. The term "good solvent" as used herein encompasses in its concept solvents which can substantially completely dissolve the uncross-linked polymer. The term "poor solvent" as used herein, on the other hand, embraces in its concept solvents which are unable to dissolve the uncross-linked polymer substantially completely.

No particular limitation is imposed on the solvent for use in the present invention. When a poor solvent is used in combination, it is preferred to choose a poor solvent such that a homogeneous phase can be formed with a good solvent. In general, it is also preferred to use a solvent which can substantially dissolve a cross-linking agent to be used. When a cross-linking agent of high hydrophilicity is used, for example, it is preferred to employ a solvent of high polarity. When a cross-linking agent of high hydrophobicity is used, on the other hand, it is preferred to employ a solvent of low polarity.

As the solvent, it is generally preferred to use only a good solvent. When a good solvent and a poor solvent are used in combination, no particular limitation is imposed on their mixing ratio, but care must be exercised to avoid any excessive impairment of the homogeneity of the cross-linking reaction of the uncross-linked polymer. In the present invention, a homogeneous solution with the uncross-linked polymer dissolved in a solvent is particularly preferred from the standpoint of the homogeneity of the cross-linking reaction.

### (2) Dispersion with the uncross-linked polymer dispersed in a solvent

When the uncross-linked polymer is used as a dispersion in a solvent, it is preferred to prepare the dispersion in a form resembling a homogeneous liquid mixture as close as. possible.

The solvent which is used upon formation into the dispersion is a mixed solvent of a good solvent and a poor solvent or a poor solvent for the uncross-linked polymer.

In a dispersed state, the particle size (average particle diameter) of the uncross-linked polymer may preferably be as small as possible, because a more homogeneous cross-linking reaction can be conducted. Based on the particle size of the uncross-linked polymer in a dry form, the dispersed particle size may be controlled preferably to 400 µm or smaller, more preferably 200 µm or smaller, still more preferably 100 µm or smaller, particularly preferably 10 µm or smaller. Insofar as the dispersed particles of the uncross-linked polymer are adequately small, non-homogeneity of the cross-linking reaction can be reduced, thereby making it possible to avoid reductions in yield and performance.

Particle size control of the uncross-linked polymer can. be conducted continuously or batchwise by using a dry and/or wet grinding machine. When classification is needed, continuous or batchwise classification can be conducted using a dry and/or wet classifier. Further, an apparatus equipped with a grinding mechanism and a classifying mechanism in combination may also be used.

If the particle size of the uncross-linked polymer is so small that difficulty arises in operation, granulation in a self-granulation system and/or a forced granulation system may be conducted.

As a method for determining the particle size (average particle diameter) of the uncross-linked polymer, there is, for example, a measuring method which makes use of standard sieves. Measurement of a particle size distribution and setting of a maximum particle diameter can be achieved by conducting dry or wet sifting while using the standard sieves, for example, together with a mechanical shaking apparatus.

As another method for determining the particle size (average particle diameter) of the uncross-linked polymer, there is also a measuring method which relies upon a laser diffraction scattering analysis. According to this method, the uncross-linked polymer is dispersed usually in a poor solvent for the uncross-linked polymer, and a particle size distribution can be measured by the laser diffraction scattering analysis.

### (3) Melt of the uncross-linked polymer, the temperature of which is equal to or higher than the melting point of the uncross-linked polymer

When the uncross-linked polymer has a melting point, the present invention also permit using a melt, which has been obtained by bringing the uncross-linked polymer to temperature condition equal to or higher than the melting point, as a liquid uncross-linked polymer.

### [Specific examples of the liquid uncross-linked polymer]

As specific examples of the liquid uncross-linked polymer in the present invention, a description will be made about polysuccinimides.

As the liquid polysuccinimide in the present invention, it is preferred to prepare a solution with at least a portion of the polysuccinimide dissolved in a solvent or a dispersion with the polysuccinimide dispersed in a solvent. The solvent may be a good solvent and/or a poor solvent for the polysuccinimide. Specific examples of the good solvent can include N,N-dimethylformamide (DMF), N,N-dimethylacetamide, N-methylpyrrolidone, N,N'-dimethylimidazolidinone, dimethylsulfoxide, and sulfolane. Among these, N,N-dimethyl-formamide and N,N-dimethylacetamide are particularly preferred because of their high dissolving power for the polysuccinimide. These solvents can be used either singly or in combination. Specific examples of the poor solvent, on the other hand, can include water; alcohols such as methanol, ethanol, propanol, isopropanol, butanol, pentahol, hexanol, heptanol, octanol, 2-methoxyethanol and 2-ethoxyethanol; glycols such as ethylene glycol, diethylene glycol, triethylene glycol, propylene glycol and dipropylene glycol; glycosolves such as methylglycosolves and ethylglycosolves; ketones such as acetone, methyl ethyl ketone and methyl isobutyl ketone; cyclic ethers such as tetrahydrofuran and dioxane; and petroleum ether pentane, hexane, heptane, octane, cyclohexane, benzene, toluene, ethylbenzene, xylene, decalin, diphenyl ether, anisole, cresol. Among these, water, methanol, ethanol, propanol, isopropanol and acetone are particularly preferred in that they have relatively low boiling point and can be recovered with ease. These solvents can be used either singly or in combination. These poor solvents can also be used to control the progress of the cross-linking reaction (for example, to retard the progress of the reaction).

Upon preparation of a solution with at least a portion of the polysuccinimide dissolved in a solvent, use of such a good solvent alone is generally preferred. When a good solvent and a poor solvent are used in combination, no particular limitation is imposed on their mixing ratio, but care must be exercised to avoid any excessive impairment of the homogeneity of the cross-linking reaction of the polysuccinimide.

As a specific standard, the poor solvent is mixed in the good solvent to an extent such that as the cross-linked polyaspartic acid resin, the water-absorbing performance and yield can be set at predetermined target values. If the poor solvent is mixed more, the effects of the poor solvent are exhibited. The polysuccinimide is, therefore, brought into a dispersed state, thereby making it possible to prevent the cross-linked product from turning into a gel. However, the progress of the cross-linking reaction is generally retarded so that a large reactor is required. If the poor solvent is mixed less or no poor solvent is used, the effects of the good solvent are exhibited so that a state in which the polysuccinimide has sufficient homogeneity can be obtained. In general, use of the poor solvent in a smaller proportion or non-use of the poor solvent can reduce energy which is required for the recovery of the solvent.

The form of the liquid polysuccinimide may preferably be a homogeneous solution. In the case of a dispersed state, on the other hand, it is preferred to bring it to a state resembling a homogeneous solution as close as possible. In a dispersed state, the particle size (average particle diameter) of the polysuccinimide may preferably be as small as possible, because a more homogeneous cross-linking reaction can be conducted. Based on the particle size of the polysuccinimide in a dry form, the dispersed particle size may be controlled preferably to 400 µm or smaller, more preferably 200 µm or smaller, still more preferably 100 µm or smaller, particularly preferably 10 µm or smaller. Insofar as the dispersed particles of the polysuccinimide are adequately small, non-homogeneity of the cross-linking reaction can be reduced, thereby making it possible to avoid reductions in yield and performance.

Particle size control of the polysuccinimide can be conducted continuously or batchwise by using a dry and/or wet grinding machine. When classification is needed, continuous or batchwise classification can be conducted using a dry and/or wet classifier. Further, an apparatus equipped with a grinding mechanism and a classifying mechanism in combination may also be used.

If the particle size of the polysuccinimide is so small that difficulty arises in operation, granulation in a self-granulation system and/or a forced granulation system may be conducted.

As a method for determining the particle size (average particle diameter) of the polysuccinimide, there is, for example, a measuring method which makes use of standard sieves. Measurement of a particle size distribution can be achieved by conducting dry or wet sifting while using the standard sieves, for example, together with a mechanical shaking apparatus. As another method for determining the particle size (average particle diameter) of the polysuccinimide, there is also a measuring method which relies upon a laser diffraction scattering analysis. According to this method, the polysuccinimide is dispersed usually in a poor solvent for the polysuccinimide, and a particle size distribution can be measured by the laser diffraction scattering analysis.

No particular limitation is imposed on the concentration of the polysuccinimide in the reaction mixture at a time point that the cross-linking reaction begins to proceed, but in general, its concentration may range preferably from 1 to 80 wt.%, more preferably from 5 to 60 wt.%, still more preferably from 10 to 50 wt.%, particularly preferably from 15 to 40 wt.%. It is preferred to use the polysuccinimide by adjusting its concentration within this range in view of the mixing readiness with the liquid cross-linking agent.

### [Liquid cross-linking agent]

To obtain a good mixed state with the above-described liquid uncross-linked polymer, it is preferred to use the cross-linking agent in a liquid form in the present invention.

As the liquid cross-linking agent in the present invention, (1) a solution with at least a portion of the cross-linking agent dissolved in a solvent, (2) a dispersion with the cross-linking agent dispersed in a solvent or (3) a melt of the cross-linking agent, the temperature of which is equal to or higher than the melting point of the cross-linking agent, can be used preferably.

Although no particular limitation is imposed on the concentration of the cross-linking agent in such a solution, dispersion or melt, the concentration, in general, may range preferably from 0.1 to 100 wt.%, more preferably from 1 to 90 wt.%, more preferably from 10 to 85 wt.%, particularly preferably from 15 to 80 wt.%. It is preferred to use the cross-linking agent by adjusting its concentration within this range in view of the mixing readiness with the liquid cross-linking agent. Incidentally, the concentration of 100 wt.% means that the cross-linking agent, which has a temperature equal to or higher than its melting point and is in a liquid form, is used as is without diluting it with a solvent or the like.

In the present invention, no particular limitation is imposed on an apparatus which is used to produce the liquid cross-linking agent. As an apparatus for producing the liquid cross-linking agent, it is possible to employ a stirred tank, a kneader, a single-shaft or twin-shaft kneader, or the like.

### (1) Solution with at least a portion of the cross-linking agent dissolved in a solvent

A solution with at least a portion of the cross-linking agent dissolved in a solvent can be obtained by using a good solvent for the cross-linking agent or a good solvent and poor solvent for the cross-linking agent. The term "good solvent" as used herein encompasses in its concept solvents which can substantially completely dissolve the cross-linking agent. The term "poor solvent" as used herein, on the other hand, embraces in its concept solvents which are unable to dissolve the cross-linking agent substantially completely. No particular limitation is imposed on the solvent to be used. In general, the solvent can be the same as the solvent employed for the uncross-linked polymer (for example, a polysuccinimide or the like) . It is also possible to use at least one solvent selected from the groups of solvents exemplified above as good solvents and poor solvents for the polysuccinimide. It is to be noted that the good solvent and/or poor solvent for the uncross-linked polymer is not necessarily limited to the same one(s) as the good solvent and/or poor solvent for the cross-linking agent. No particular limitation is imposed on the solvents to be employed in the present invention.

As the solvent, it is generally preferred to use only a good solvent. When a good solvent and a poor solvent are used in combination, it is generally preferred to choose the good solvent and the poor solvent such that a homogeneous phase can be formed. No particular limitation is imposed on their mixing ratio, but care must be exercised to avoid any excessive impairment of the homogeneity of the cross-linking reaction of the uncross-linked polymer.

In the present invention, a homogeneous solution with the cross-linking agent dissolved in a solvent is particularly preferred from the standpoint of the homogeneity of the cross-linking reaction.

### (2) Dispersion with the cross-linking agent dispersed in a solvent

When the cross-linking agent is used as a dispersion in a solvent, it is preferred to prepare the dispersion in a form resembling a homogeneous liquid mixture as close as possible.

The solvent which is used upon formation into the dispersion is a mixed solvent of a good solvent and a poor solvent or a poor solvent for the cross-linking agent.

In a dispersed state, the particle size (average particle diameter) of the cross-linking agent may preferably be as small as possible, because a more homogeneous cross-linking reaction can be conducted. Based on the particle size of the cross-linking agent in a dry form, the dispersed particle size may be preferably 400 µm or smaller, more preferably 200 µm or smaller, particularly preferably 100 µm or smaller, most preferably 10 µm or smaller. Insofar as the dispersed particles of the cross-linking agent are adequately small, non-homogeneity of the cross-linking reaction can be reduced, thereby making it possible to avoid reductions in yield and performance.

Particle size control of the cross-linking agent can be conducted continuously or batchwise by using a dry and/or wet grinding machine. When classification is needed, continuous or batchwise classification can be conducted using a dry and/or wet classifier. Further, an apparatus equipped with a grinding mechanism and a classifying mechanism in combination may also be used. If the particle size of the cross-linking agent is so small that difficulty arises in operation, granulation in a self-granulation system and/or a forced granulation system may be conducted.

As a method for determining the particle size (average particle diameter) of the cross-linking agent, there is, for example, a measuring method which makes use of standard sieves. Measurement of a particle size distribution can be achieved by conducting dry or wet sifting while using the standard sieves, for example, together with a mechanical shaking apparatus. As another method for determining the particle size (average particle diameter) of the cross-linking agent, there is also a measuring method which relies upon a laser diffraction scattering analysis. According to this method, the cross-linking agent is dispersed usually in a poor solvent for the cross-linking agent, and a particle size distribution can be measured by the laser diffraction scattering analysis.

### (3) Melt of the cross-linking agent, the temperature of which is equal to or higher than the melting point of the cross-linking agent

When the cross-linking agent has a melting point, the present invention also permit using a melt, which has been obtained by bringing the cross-linking agent to temperature condition equal to or higher than the melting point, as a liquid cross-linking agent.

### [Amount of the cross-linking agent to be used]

No particular limitation is imposed on the amount of the cross-linking agent to be used. A amount of the cross-linking agent to be used, which corresponds to a cross-linking degree capable of exhibiting performance and properties commensurate with the application of the cross-linked polymer (for example, a cross-linked polyaspartic acid resin or the like) is chosen as desired. The term "cross-linking degree" as used herein is defined to indicate the distance or the number of constituent monomer units between adjacent cross-links and the proportion of cross-linked parts relative to the polymer backbone.

In general, the amount of the cross-linking agent is set to range preferably from 0.001 to 80 mol.%, more preferably from 0.01 to 30 mol.%, particularly preferably from 0.1 to 20 mol.% based on the total number of monomer units in the uncross-linked polymer (for example, a polysuccinimide or the like). Generally speaking, use of the cross-linking agent in an unduly large amount leads to an excessively high cross-linking degree so that, in the case of a cross-linked polymer intended to exhibit water absorbency like a cross-linked polyaspartic acid resin or the like, the water absorbency is lowered. On the other hand, use of the cross-linking agent in an excessively small amount results in an excessively low cross-linking degree so that the resulting cross-linked polymer may be water-soluble in an extreme case. In the case of a polyaspartic acid resin, for example, a polymer which does not exhibit water absorbency and is cross-linked only partially is obtained.

### [Catalyst]

In the cross-linking reaction, a catalyst may be used as needed. As a catalyst, for example, in the cross-linking reaction of the polysuccinimide, a basic catalyst is employed in general.

Illustrative of the basic catalyst are inorganic basic catalysts, for example, metal hydroxides such as sodium hydroxide, potassium hydroxide and lithium hydroxide, metal carbonates such as sodium carbonate, potassium carbonate and lithium carbonate, metal hydrogencarbonates such as sodium hydrogencarbonate and potassium hydrogencarbonate, metal acetates such as sodium acetate and potassium acetate, metal salts such as sodium oxalate, and ammonia; and organic basic catalysts, for example, amines such as trimethylamine, triethylamine, tripropylamine, tributylamine, tripentylamine, trihexylamine, triethanolamine, tripropanolamine, tributanolamine, tripentanolamine, trihexanolamine, dimethylamine, diethylamine, dipropylamine, dibutylamine, dipentylamine, dihexylamine, dicyclohexylamine, dibenzyl-amine, ethylmethylamine, methylpropylamine, butylmethylamine, methylpentylamine, methylhexylamine, methylamine, ethylamine, propylamine, butylamine, pentylamine, hexylamine, octylamine, decylamine, dodecylamine, hexadecylamine, pyridine, picoline and quinoline.

### [Cross-linking reactor]

The basic concept of the continuous production process and apparatus of the present invention for the cross-lined polymer will be described with reference to FIG. 1. According to the present invention, an uncross-linked polymer, which has been fed in a liquid form through a feed line (line A), and a cross-linking agent, which has been fed in a liquid form through another feed line (line B), are continuously mixed together at a mixing junction (M) such that the uncross-linked polymer is allowed to continuously undergo a cross-linking reaction, and the resulting cross-linking reaction product is continuously discharged and collected as a cross-linked polymer through a discharge line (line C). In FIG. 1, each arrow indicates in which direction the relevant material is flowing.

As the mixing junction (M), it is preferred to use a cross-linking reactor provided with a "mixing section" and a "cross-linking reaction section". At the mixing section, the liquid uncross-linked polymer and the liquid cross-linking agent are mixed together. At the cross-linking reaction section, on the other hand, the resulting mixture of the liquid uncross-linked polymer and the cross-linking agent are continuously subjected to the cross-linking reaction. The mixing section and the cross-linking reaction section may be constructed of independent or discrete equipment or nonindependent or non-discrete equipment. In general, however, the cross-linking reaction may practically begin as soon as the cross-linking agent and the uncross-linked polymer are brought into contact with each other, and the cross-linking reaction should not be restrictively considered as taking place only in the cross-linking reaction section.

A description will hereinafter be made of details of the mixing section and the cross-linking reaction section.

### (1) Mixing section

In the mixing section, the liquid uncross-linked polymer and the liquid cross-linking agent are mixed to form a substantially homogeneous mixture.

As the mixing section, at least one of the following embodiments (1-1) to (1-4) can be preferably used in the present invention.
(1-1) A mixing section constructed including a structure that two or more feed lines, including the two lines of the line A and the line B, join.
(1-2) A mixing section constructed including a part having a structure that two or more feed lines, including the two lines of the line A and the line B, join, and another part having a stationary mixer.
(1-3) A mixing section constructed including a part having a structure that two or more feed lines, including the two lines of the line A and the line B, join, and a mixer having one or more rotary agitating shafts.
(1-4) A mixing section constructed including a part having a structure that two or more feed lines, including the two lines of the line A and the line B, join in a mixer having one or more rotary agitating shafts.

One or more mixing sections may be arranged. When plural mixing sections are used, they can be used in series and/or in parallel. When plural mixing sections are used, the uncross-linked polymer and/or the cross-linking agent can be additionally fed between the individual mixing sections.

The temperature of the mixing section may range from 5 to 300°C, with 10 to 200°C being especially preferred. If the temperature of the mixing section is too high, the cross-linking reaction generally proceeds before a fully mixed state is obtained. This leads to unevenness in cross-linking degree and hence, to reduction(s) in performance and/or yield. In some instances, modifications of the uncross-linked polymer and/or the cross-linking agent may take place. If the temperature is too low, on the other hand, the liquid uncross-linked polymer and the liquid cross-linking agent generally become higher in viscosity so that the mixing may take a longer time.

No particular limitation is imposed on the pressure of the mixing section. The mixing section can be any one of an elevated pressure system, an environmental pressure system or a reduced pressure system insofar as thorough mixing can be achieved. In general, the pressure may be set preferably at 200 MPa or lower, more preferably at 50 MPa or lower. As an unduly high pressure needs high pressure resistance, difficult designing of equipment and/or costly equipment is required in general.

The residence time in the mixing section should be set at a time sufficient to obtain a fully homogeneous mixed state. The residence time in the mixing section may range preferably from 0.01 second to 10 hours, more preferably from 0.05 second to 1 hour, particularly preferably from 0.1 second to 30 minutes, most preferably from 0.5 second to 10 minutes. An unduly long residence time requires a large mixing section and makes the designing of equipment difficult. An excessively short residence time, on the other hand, may not be able to achieve a fully homogeneous mixed state.

Upon mixing, various conditions are chosen as needed to obtain a preferred mixed state. Specific examples of conditions include the concentrations and flow rates (linear velocities) of the reaction raw materials (the uncross-linked polymer and cross-linking agent), the temperature and pressure of the mixing section, the number of mixing. section(s), the residence time in the mixing section, and the pipe diameter of the mixing section. Described more specifically, when the liquid uncross-linked polymer (for example, a polysuccinimide solution or the like) has high viscosity, for example, the liquid uncross-linked polymer may be heated to lower its viscosity. Since the cross-linking reaction may also be promoted at the same time in this case, it is necessary to choose conditions (for example, the residence time in the mixing section) such that the cross-linking degree does not become excessively uneven.

Even when a cross-linking agent of high reactivity is used, a mixed state of high homogeneity can still be achieved generally by vigorously mixing the uncross-linked polymer and the cross-linking agent together. In this case, a shorter residence time in the mixing section is generally preferred.

No particular limitation is imposed on the stationary mixer (for example, Kenics mixer, Sulzer SMX, or Sulzer SMV) or the mixer having one or more rotary agitating shafts (for example, a horizontal twin-shaft agitator or a horizontal kneading agitator), which is used at the mixing section in the present invention. Equipment usable in the present invention include those disclosed in "7. Stirring" (pages 421-454), "6. Heat Transfer and Evaporation" (pages 343-420), and "5. Flow" (pages 283-342) of "KAGAKU KOGAKU BINRAN (Handbook of Chemical Engineering), Revised 6^{th} Edition" (Compiled by: The Society of Chemical Engineers, Japan; Published by: MARUZEN CO., LTD.; 1999).

### (2) Cross-linking reaction section

In the cross-linking reaction section, the substantially homogeneous mixture of the liquid uncross-linked polymer and the liquid cross-linking agent is subjected to a cross-linking reaction to produce a cross-linked polymer

As the cross-linking reaction section, at least one of the following embodiments (2-1) to (2-3) can be preferably used in the present invention.
(2-1) A cross-linking reaction section constructed including a single-tube tubular reactor or a multiple-tube tubular reactor.
(2-2) A cross-linking reaction section constructed including a reactor having one or more rotary agitating shafts.
(2-3) A cross-linking reaction section constructed including a single-tube or multiple-tube tubular reactor and a reactor having one or more rotary agitating shafts.

The cross-linking reaction section can use a single-tube or multiple-tube tubular reactor or a reactor having one or more rotary agitating shafts. Use of a multiple-tube reactor and/or an adjustment or the like of the shape of a die portion may be feasible, for example, to reduce a pressure loss in the cross-linking reaction section.

The cross-linking reaction section may also have a heating function and/or a cooling function. Specifically, a reactor equipped with a heat exchanger or the like may be used, for example.

No particular limitation is imposed on the volume of the reactor in the cross-linking reaction section. In general, it is suitably determined in view of the scale of production and various reaction conditions (the reaction temperature and pressure, the flow rate, the reactivity of the cross-linking agent, etc.) to give such a volume that the cross-linking degree at an outlet of the cross-linking reaction section reaches a predetermined target value.

The temperature of the cross-linking reaction section may range preferably from 5 to 300°C, more preferably from 15 to 200°C, particularly preferably from 20 to 150°C, most preferably from 30 to 120°C. If the temperature of the cross-linking reaction section is excessively high, there is generally a potential problem in that modifications or the like of the cross-linked polymer may occur. If the temperature is excessively low, on the other hand, the progress of the cross-linking reaction is generally retarded so that a large cross-linking reaction section is required. No particular limitation is imposed on the pressure of the cross-linking reaction section. It can be an environmental pressure system or a reduced pressure system insofar as the cross-linking reaction can be conducted stably. In general, the pressure may be set preferably at 200 MPa or lower, more preferably at 50 MPa or lower. As an unduly high pressure needs high pressure resistance, difficult designing of equipment and/or costly equipment is required in general.

The residence time in the cross-linking reaction section should be set at a time sufficient to allow the cross-linking reaction to proceed fully. The residence time in the cross-linking reaction section may range generally from 0.1 second to 10 hours, preferably from 1 second to 1 hour, more preferably from 10 seconds to 30 minutes, particularly preferably from 30 seconds to 15 minutes, most preferably from 1 minute to 10 minutes. An unduly long residence time requires a large cross-linking reaction section and makes the designing of equipment difficult. An excessively short residence time, on the other hand, may not be able to allow the cross-linking reaction to proceed fully.

No particular limitation is imposed on the tubular reactor for use in the present invention. The tubular reactor may include a stationary mixer (for example, Kenics mixer, Sulzer SMX, or Sulzer SMV).

Further, no particular limitation is imposed on the mixer having one or more rotary agitating shafts for use in the present invention (for example, a horizontal twin-shaft agitator, a horizontal kneading agitator or a twin-shaft kneader).

Equipment usable in the present invention include those disclosed in "7. Stirring" (pages 421-454), "6. Heat Transfer and Evaporation" (pages 343-420), and "5. Flow" (pages 283-342) of "KAGAKU KOGAKU BINRAN (Handbook of Chemical Engineering), Revised 6^{th} Edition" (Compiled by: The Society of Chemical Engineers, Japan; Published by: MARUZEN CO., LTD.; Published in: 1999).

### (3) Material of the cross-linking'reactor

For the cross-linking reactor, it is preferred to use a material on which one or more of the liquid uncross-linked polymer, the liquid cross-linking agent and the cross-linked polymer hardly adhere. In particular, the cross-linked polymer (for example, the cross-linked polysuccinimide) generally has high viscosity and adherence. It is, therefore, important to a material, on which the cross-linked polymer hardly adhere, at the above-described cross-linking reaction section. Use of a material on which cross-linked polymer readily adheres may result in occurrence of an excessive pressure loss or blocking in the cross-linking reactor in some instances. On the other hand, it is preferred for the cross-linked reactor to use a material which is resistant to corrosion, deterioration and the like by the solvent, cross-linking agent or the like to be employed.

Examples of preferable materials, which meet such conditions as described above, can include metals, resins and rubbers.

Especially when the cross-linked polymer has high adherence, it is preferred to use, for example, a silicone resin such as polytetrafluoroethylene (PTEF), fluorinated ethylene-propylene copolymer (FEP), PFA resin, polychlorotrifluoroethylene (PCTFE), ethylene-tetra fluoro ethylene-ethylene copolymers (ETFE), poly(vinylidene fluoride), or poly(vinyl fluoride); a silicone resin such as polysiloxane or silicone rubber; a polyolefin resin such as polyethylene or polypropylene; a polyetherether ketone; methylpentene resin; phenol resin; natural rubber; styrene rubber; butyl rubber; ethylene-propylene rubber; or the like. Among these, particularly preferred are fluorinated resins, such as tetrafluorinated resin, fluorinated ethylene-propylene copolymer (FEP), PFA resin, polychlorotrifluoroethylene (PCTFE), ethylene-tetra fluoro ethylene-ethylene copolymers (ETFE), poly(vinylidene fluoride) and poly (vinyl fluoride), and silicone resins, such as polysiloxane or silicone rubber, for their solvent resistance and also for their low adherence to the cross-linked polymer.

The cross-linking reactor may be constructed of at least one material selected from the above-described materials (e.g., metals, resins, and rubbers) . Whenever necessary, it is also possible to use a metal (e.g., stainless steel or the like) as a principal material and additionally to employ the above-described resin and/or rubber as a lining on at least a part of an area with which the liquid uncross-linked polymer, the liquid cross-linking agent or the cross-linked polymer is brought into contact.

### [Step for increasing the specific surface area of the cross-linked polymer]

After the cross-linking reaction, a further step may be practiced to conduct treatment such that the specific surface area of the cross-linked polymer (for example, the cross-linked polysuccinimide or the like) is increased. This step for increasing the specific surface area (hereinafter called "the specific surface area increasing step") is conducted using equipment having at least one of the following functions: (1) a function to divide the cross-linked polymer into particles, (2) a function to divide the cross-linked polymer into smaller particles, (3) a function to subject the cross-linked polymer to heat treatment, and (4) a function to treat the cross-linked polymer under reduced pressure.

Depending on conditions such as the concentration(s) of the uncross-linked polymer and/or the cross-linked polymer, the used amount of the cross-linking agent and the concentration of the poor solvent, the cross-linked polymer can be obtained in various forms such as an extended gel-like body, a swollen body, noodle-like strings, and solid rods in the present invention.

When the cross-linked polymer is obtained, for example, in the form of a gel-like body, the shape of the resulting extended gel-like body reflects the configurations of the cross-linking reaction section (for example, the pipe diameter of a tubular reactor, the shape of a die portion of a horizontal twin-shaft kneader). An adjustment of the shape of the cross-linking reaction section, therefore, makes it possible to divide the cross-linked polymer into particles and to increase the specific surface area. When a tubular reactor is used, for example, a smaller pipe diameter is more preferred because the specific surface area of the cross-linked polymer becomes greater as the pipe diameter becomes smaller. In general, however, it is preferred to determine the pipe diameter by taking various conditions, such as production scale and the number of pipes in a multiple-pipe reactor, into consideration such that the pressure loss in the tubular reactor does not become too large. Likewise, it is also preferred to adjust the shape or the like of the die portion.

Further, the divided cross-linked polymer can be formed into a granular to fine particulate gel by using equipment provided with a function to mechanically divide the cross-linked polymer into particles, such as a chopping machine or a pelletizer. As an alternative, a crushing granulator, a compression granulator, an extrusion granulator or the like can also be used. When dividing the cross-linked polymer into particles, the division is controlled specifically such that the maximum particle diameter falls within a range of from 1 µm to 10 mm, more preferably from 10 µm to 1 mm, particularly preferably from 100 µm to 700 µm. Using equipment provided with a mechanically dividing function, the divided cross-linked polymer is obtained with a preferred maximum particle diameter selected depending on the application from the above-described range. Incidentally, the maximum particle diameter can be determined by a similar method as that described above in connection with the above-described maximum particle diameter of the uncross-linked polymer. When the cross-linked polymer is swollen with the cross-linking reaction solvent (the solvent used upon preparation of the liquid uncross-linked polymer and/or the liquid cross-linking agent), the cross-linked polymer can be caused to shrink into smaller particles by introducing the cross-linked polymer into a solvent which is a poor solvent for the cross-linked polymer but is a good solvent for the cross-linking reaction solvent.

By conducting agitation or the like and applying shear force at this stage, the division of the cross-linked polymer into smaller particles can be promoted. When this division into smaller particles is conducted in a solvent, heat treatment may be applied in combination. An unduly low heat treatment temperature may, however, require a long time until the cross-linked polymer is divided into smaller particles. An excessively high heat treatment temperature, on other hand, may result in modifications of the cross-linked polymer. Especially when the heat treatment is conducted concurrently with the division into smaller particles, the heat treatment temperature may range preferably from 30 to 300°C, more preferably from 60 to 200°C, especially preferably from 80 to 150°C. When the cross-linked polysuccinimide is in the form of a gel swollen with DMF employed as a cross-linking reaction solvent, the cross-linked polysuccinimide can be divided into smaller particles by introducing it into a solvent - which is a poor solvent for the cross-linked polysuccinimide but is a good solvent for DMF - e.g., an alcohol such as methanol, a ketone such as acetone, or water and applying shear force while conducting heat treatment within the above-described temperature range.

When a cross-linking reaction solvent is used, the specific surface area of the cross-linked polymer can be efficiently increased by conducting heat treatment and/or depressurization treatment to have the solvent, which is contained in the cross-linked polymer, evaporated such that the cross-linked polymer is brought into an expanded form with the thus-evaporated solvent.

The heat treatment is conducted preferably at 30 to 300°C, more preferably at 60 to 200°C, especially preferably at 80 to 150°C. An unduly high heat treatment temperature may cause modifications of the cross-linked polymer. An excessively low heat treatment temperature, on the other hand, may not be able to bring about the effect of the heat treatment.

On the other hand, the depressurization treatment is conducted preferably at 0.00001 to 0.1 MPa, more preferably at 0.0001 to 0.07 MPa, particularly preferably at 0.001 to 0.05 MPa. An unduly low depressurization treatment pressure generally leads to difficulty in designing equipment commensurate with the high vacuum level. An excessively high depressurization treatment pressure, on the other hand, may not be able to bring about the effect of the depressurization treatment.

The cross-linked polymer, for example, the cross-linked polysuccinimide, the specific surface area of which has been increased by a method as described above, can bring about an advantageous effect in that in the subsequent hydrolyzing step, the time of the hydrolysis reaction can be shortened.

No particular limitation is imposed on the equipment for use in the specific surface area increasing step in the present invention. Equipment usable in the specific surface area increasing step include those disclosed in "7. Stirring" (pages 421-454), "6. Heat Transfer and Evaporation" (pages 343-420), "5. Flow" (pages 283-342), and "16. Handling of Powdery or Granular Materials" of "KAGAKU KOGAKU BINRAN (Handbook of Chemical Engineering), Revised 6^{th} Edition" (Compiled by: The Society of Chemical Engineers, Japan; Published by: MARUZEN CO., LTD.; Published in: 1999).

### [Isolation step of the cross-linked polymer]

In the present invention, the cross-linked polymer may be isolated by removing the cross-linking reaction solvent and salts (for example, sodium chloride, sodium phosphate and/or the like) subsequent to the cross-linking reaction. It is, however, to be noted that the salts are not necessarily removed together with the cross-linking reaction solvent.

For example, subsequent to the production of the cross-linked polysuccinimide, the cross-linking reaction solvent may be removed to isolate the cross-linked polysuccinimide, followed by a hydrolyzing procedure. Compared with practice of the hydrolyzing procedure without removal of the cross-linking reaction solvent, these procedures may make it possible to significantly reduce, for example, loads (e.g., energy required for distillation, a supplementary material needed for desalting, and the like) of a purification procedure and the like required for the reuse of the cross-linking reaction solvent. In some instances, these procedures may also be able to protect the cross-linking reaction solvent from decomposition which would otherwise take place unless the cross-linking reaction solvent were removed before the hydrolysis.

In the present invention, it is preferred to isolate the cross-linking polymer by conducting the removal of the cross-linking reaction solvent such that the concentration of the cross-linking reaction solvent still remaining in the cross-linked polymer is lowered generally to 50 wt.% or less, preferably to 20 wt.% or less, more preferably to 10 wt.% or less, particularly preferably to 1 wt.% or less, most preferably to 0.5 wt.% or less. An unduly high concentration of the solvent remaining in the cross-linked polymer provide the cross-linked polymer with adherence, so that special facilities (for example, facilities for transportation, storage and the like) may be used or the above-described loads for the reuse of the cross-linking reaction solvent may become excessive.

The isolation step of the cross-linked polymer in the present invention preferably comprises at least one step selected from the following steps: (1) an extraction step, (2) a solid-liquid separation step, and (3) a drying step. When a plurality of steps out of these steps (1) to (3) are practiced, no limitation is imposed on their order. Further, one of the steps can be repeated a plurality of times. In addition, the isolation step can be practiced in combination with the above-described specific surface increasing step.

### (1) Extraction step

In the present invention, it is preferred to conduct the extraction step by using a solvent which is a poor solvent for the cross-linked polymer but is a good solvent to the cross-linking reaction solvent. When the cross-linked polymer is a cross-linked polysuccinimide produced using DMF, it is particularly preferred to choose one or more solvents from the above-described group of poor solvents for polysuccinimides (for example, water, methanol, ethanol, propanol, isopropanol, acetone, etc.). These solvents may be used either singly or in combination. The solvent may contain a salt (for example, sodium chloride, sodium phosphate or the like).

Examples of equipment for use in the extraction procedure can include a stirred tank, a fixed bed extractor, a moving bed extractor, and a Rotocel extractor. Equipment and methods usable for the extraction in the present invention include those disclosed in "12. Extraction and Liquid-Liquid Reaction", "7. Stirring" (pages 421-454), and "6. Heat Transfer and Evaporation" (pages 343-420) of "KAGAKU KOGAKU BINRAN (Handbook of Chemical Engineering), Revised 6^{th} Edition" (Compiled by: The Society of Chemical Engineers, Japan; Published by: MARUZEN CO., LTD.; Published in: 1999).

The extraction procedure is conducted as either single-stage extraction or multi-stage extraction. In multi-stage extraction, the extraction solvent is used in either a counter current manner or a cocurrent manner. Counter current extraction is particularly preferred as it makes it possible to reduce the amount of the extraction solvent to be used. In a multi-stage extraction procedure, the extraction solvent with the cross-linking reaction solvent contained therein may be used in at least some of the stages.

The used amount of the extraction solvent governs the residual concentrations of the cross-linking reaction solvent and the above-described salt after the extraction procedure. In general, the amount of the extraction solvent to be used may range preferably from 0.1 to 100 parts by weight, more preferably from 0.3 to 60 parts by weight, particularly' preferably from 0.5 to 40 parts by weight, most preferably from 1 to 20 parts by weight, all per part by weight of the cross-linked polymer. Use of the extraction solvent in an excessively large amount leads to a low residual concentration of the cross-linking reaction solvent in the extracts so that upon separation of the cross-linking reaction solvent and the extraction solvent from each other after the extraction, the efficiency is lowered. Use of the extraction solvent in an unduly small amount, on the other hand, leads to an increase in the concentration of the cross-linking reaction solvent in the extract, so that the concentration of the cross-linking reaction solvent remaining in the cross-linked polymer increases. To reduce the amount of the extraction solvent to be used and also to conduct the extraction procedure with good efficiency, multi-stage counter current extraction is preferred.

When conducting multi-stage extraction, it is preferred to conduct the extraction in each stage after separating the cross-linked polymer and the extract from each other to possible maximum extent subsequent to completion of the extraction in the preceding stage. Described specifically, the separation is conducted until the amount of the extract contained per 100 parts by weight of the cross-linked polymer is reduce generally to 100 parts by weight or less, preferably to 50 parts by weight or less, particularly preferably to 10 parts by weight or less, most preferably to 5 parts by weight or less.

The separation between the extract and the cross-linked polymer can be conducted specifically in a step making use of a filter, a centrifugator, sedimentation equipment or flotation equipment or a combination thereof. Incidentally, subsequent to the separation of the cross-linked polymer and the extract from each other, the extract still contained in the cross-linked polymer may be subjected to displacement washing by using the same or different extraction solvent. The amount of the extraction solvent to be used in each displacement washing procedure may range preferably from 0.01 to 50 parts by weight, more preferably from 0.05 to 10 parts by weight, particularly preferably from 0.1 to 5 parts by weight, all per part by weight of the cross-linked polymer.

In the present invention, the temperature of the extraction procedure may preferably be from 5 to 300°C. If this temperature is lower than 5°C, the residual concentration of the cross-linking reaction solvent in the cross-linked polymer becomes higher. If the temperature exceeds 300°C, the cross-linked polymer is modified at certain parts thereof and is lowered in molecular weight, and in some instances, is colored, leading to a reduction in quality. The extraction temperature may range preferably from 10 to 200°C, more preferably from 15 to 150°C, particularly preferably from 20 to 100°C.

No particular limitation is imposed on the pressure in this step. It is preferred to determine the pressure in view of physical properties of the extraction solvent to be employed. If the temperature at which the extraction procedure is conducted is lower than the critical temperature of the extraction solvent, the extraction pressure may generally be set at such a level that a liquid phase exists at least locally. If the extraction is conducted, for example, under an atmosphere of an inert gas such as nitrogen, carbon dioxide or argon, it is preferred to pressurize with the gas to a level equal to or higher than the saturated vapor pressure of the extraction solvent at the extraction temperature. If the temperature at which the extraction procedure is conducted is higher than the critical temperature of the extraction solvent, the extraction pressure may generally be set at such a level that at least a portion of the cross-linking reaction solvent is dissolved in the extraction solvent.

When multi-stage extraction is conducted, the temperatures and/or pressures in the respective stages can be set at different values within the above-described ranges, respectively.

The time which is required for the extraction procedure in the present invention may range generally from 0.5 second to 12 hours, preferably from 1 second to 5 hours, more preferably from 3 seconds to 3 hours, particularly preferably from 5 seconds to 2 hours, most preferably from 10 seconds to 60 minutes. The term "extraction time" as used herein means a time during which the polymer and the extraction solvent and/or the extract remain in contact with each other at the temperature at which the extraction is being conducted. If a long time is needed for the extraction, large equipment is required, thereby making the designing of the equipment difficult. If the extraction time is too short, on the other hand, there is a potential problem in that the separation of the cross-linking solvent and salt may not be conducted fully.

### (2) Solid-liquid separation step

As a separating procedure in the solid-liquid separation step in the present invention, a method similar to the above-described separating procedure conducted between the respective stages in the multi-stage extraction can be mentioned. Described specifically, a continuous and/or batchwise separation procedure can be conducted in a step making use of a filter, a centrifugator, sedimentation equipment or flotation equipment or a combination thereof.

### (3) Drying step

In the drying step, the cross-linked polymer substantially free of solvent can be produced by driving off the cross-linking reaction solvent and/or the extraction solvent contained in the cross-linked polymer. This drying procedure can be effected under at least one pressure condition out of a vacuum system, an environmental pressure system and an elevated pressure system.

Described specifically, a continuous or batchwise drying procedure can be conducted, for example, by using at least one equipment selected from the group consisting of a hot-air material-moving dryer, a material-mixing dryer (fluidized bed dryer or the like), a material-moving and material-fixed dryer, a cylindrical dryer, an infrared dryer, a microwave dryer and a superheated steam dryer. Equipment and methods usable for the drying step in the present invention include those disclosed in "14. Moisture Control, Water Cooling and Drying" (pages 735-788), "7. Stirring" (pages 421-454), and "6. Heat Transfer and Evaporation" (pages 343-420) of "KAGAKU KOGAKU BINRAN (Handbook of Chemical Engineering), Revised 6^{th} Edition" (Compiled by: The Society of Chemical Engineers, Japan; Published by: MARUZEN CO., LTD.; Published in: 1999) . To avoid coloration or modification of the cross-linked polymer, the drying procedure may preferably be conducted generally under conditions of a lowered oxygen concentration in the system or under conditions of 0% oxygen concentration, that is, may preferably be conducted in the above-described inert gas.

It is preferred to conduct the drying procedure such that during the drying, the temperature of the cross-linked polymer remains within a range of from 5 to 300°C. If the temperature is lower than 5°C, a longer time is generally required for the drying of the cross-linked polymer. If the temperature is higher than 300°C, on the other hand, the cross-linked polymer are on the other hand, the cross-linked polymer, due to inclusion of the cross-linking reaction solvent and/or the extraction solvent, is modified at certain parts thereof and is lowered in molecular weight, and in some instances, is colored, leading to a reduction in quality. The temperature of the cross-linked polymer during the drying may range preferably from 20 to 200°C, more preferably from 40 to 150°C, particularly preferably from 50 to 120°C.

The drying procedure can be conducted in any of a vacuum system, an environmental pressure system and an elevated pressure system. The drying may be conducted under a pressure preferably of from 0.000001 to 5 MPa, more preferably of from 0.0001 to 1 MPa. An unduly low pressure generally makes it difficult to design equipment commensurate with the high vacuum. An excessively high pressure, on the other hand, may result in insufficient separation of the cross-linking reaction solvent in some instances. The time required for the drying procedure in the present invention ranges generally from 1 second to 20 hours, preferably from 30 seconds to 5 hours, more preferably from 1 minute to 3 hours, and particularly preferably from 5 minutes to 2 hours. Need for a long time for drying generally requires large equipment and results in difficult equipment designing. An unduly short drying time, on the other hand, generally involves a potential problem in that the separation of the cross-linking reaction solvent and/or the extraction solvent in this step may not be fully effected.

### [Hydrolysis of the imide rings of the cross-linked polysuccinimide]

In this invention, a hydrolyzing procedure may be applied to the cross-linked polysuccinimide. By this procedure, the imide ring portions can be opened to obtain aspartic acid structures. Here, the cross-linked polysuccinimide may be either in a solvent-removed form or in a solvent-containing form as described above.

The hydrolyzing procedure is conducted under basic conditions by suspending the cross-linked polysuccinimide in a solvent. The pH is adjusted relying upon the concentration of an aqueous alkaline solution, and may range preferably from pH 7.5 to 13, more preferably from pH 9 to 12. An excessively high pH generally causes hydrolysis of amide bonds, and results in a resin lowered in water absorbency and yield. An unduly low pH, on the other hand, generally leads to a slower hydrolysis reaction, and is not practical.

No particular limitation is imposed on the aqueous alkaline solution for use in the hydrolyzing procedure. Specific examples can include aqueous solutions of metal hydroxides such as sodium hydroxide, potassium hydroxide and lithium hydroxide; aqueous solutions of metal carbonates such as sodium carbonate, potassium carbonate and lithium carbonate; aqueous solutions of metal hydrogencarbonates such as sodium hydrogencarbonate and potassium hydrogencarbonate; aqueous solutions of metal acetates such as sodium acetate and potassium acetate; aqueous solutions of metal salts such as sodium oxalate; and aqueous ammonia. Among these, aqueous solutions of sodium hydroxide and potassium hydroxide are preferred for their low prices.

The hydrolyzing procedure can be conducted preferably at 5 to 100°C, with 10 to 60°C being particularly preferred. An excessively high temperature generally causes hydrolysis of amide bonds, resulting in a resin lowered in water absorbency and yield. An unduly low temperature, on the other hand, generally leads to a slower hydrolysis reaction, and is not practical.

The hydrolyzing procedure can be conducted either in an environmental pressure system or in a reduced pressure system insofar as the pressure is at such a level that a liquid phase exists at least locally. It is only required to stably conduct the hydrolyzing procedure. In general, the pressure may be controlled preferably at 30 MPa or lower, with 5 MPa or lower being particularly preferred.

In general, the hydrolyzing procedure is conducted preferably for 1 minute to 30 hours, more preferably for 5 minutes to 15 hours, particularly preferably for 10 minutes to 10 hours, most preferably for 30 minutes to 5 hours, although the time during which the hydrolyzing procedure is conducted varies depending on the reaction conditions. An excessively short reaction time generally results in insufficient hydrolysis of the imide rings and hence in a reduction in water absorbency. An unduly long reaction time, on the other hand, generally allows hydrolysis of amide bond portions to proceed and thus leads to a resin lowered in water absorbency and yield.

The solvent in the hydrolyzing procedure is either water alone or a mixed solvent of water and a poor solvent and/or a salt. To heighten the volumetric efficiency, it is preferred to use the solvent in an amount as much as 0.5 to 50 times by weight, especially 1 to 10 times by weight the superabsorbent resin to be formed.

No particular limitation is imposed on the poor solvent to be used. Illustrative are alcohols such as methanol, ethanol, propanol, isopropanol, butanol, 2-methoxyethanol and 2-ethoxyethanol; glycols such as ethylene glycol, diethylene glycol, triethylene glycol, propylene glycol and dipropylene glycol; ketones such as acetone, methyl ethyl ketone and methyl isobutyl ketone; cyclic ethers such as tetrahydrofuran and dioxane; N,N-dimethylformamide, N,N-dimethyl acetamide, N-methylpyrrolidone, N,N'-dimethylimidazolidinone, dimethylsulfoxide and sulfolane. Among these, methanol, ethanol, propanol and isopropanol are preferred in that, upon drying the hydrolyzed product as a superabsorbent polymer, they permit particularly easy drying and they do not tend to remain in the absorbent resin after the drying.

No particular limitation is imposed on the salt to be used. Illustrative are metal salts, organic base salts and oxides of hydrochloric acid, sulfuric acid, nitric acid, phosphoric acid, carbonic acid, organic sulfonic acids and organic carboxylic acids. Examples of metals in the metal salts can include lithium, sodium, potassium, aluminum and potassium. Incidentally, the salt may be a salt formed by neutralization of an acid component in the system in the course of the hydrolyzing procedure.

The concentration of water in the solvent as determined based on the two components of water and the poor solvent without taking into consideration the salt in the solvent may preferably range from 5 to 100 wt.%, with a range of from 20 to 80 wt.% being more preferred and a range of from 40 to 60 wt.% being particularly preferred. An excessively low water concentration may generally result in a slow progress of the hydrolysis and in some instances, may lead to occurrence of polymer flocculation in the system so that agitation may be rendered difficult. An excessively high water concentration, on the other hand, may generally lead to formation of a gel-like mixture in the system so that agitation may be hampered.

The concentration of the salt in the solvent, which is composed of water and the salt or is composed of water, the poor solvent and the salt, may preferably be 20 wt.% or lower, with 10 wt.% or lower being more preferred. In general, an unduly low concentration of the salt may not allow the salt to exhibit its effects sufficiently, whereas an excessively high concentration of the salt may cause the salt to remain in the product.

### [Post-treatment of the cross-linked polyaspartic acid polymer]

No particular limitation is imposed on the post-treatment of the cross-linked polyaspartic acid resin formed as a result of the alkaline hydrolytic reaction of the imide rings of the cross-linked polysuccinimide. For example, procedures such as neutralization, salt interchange, drying, purification, granulation and surface cross-linking treatment may be conducted as needed. A description will hereinafter be made especially about neutralization treatment and drying.

### (i) Neutralization treatment of cross-linked polyaspartic acid resin

Neutralization treatment of the cross-linked polyaspartic acid resin can be conducted as needed. The neutralization treatment can be effected by adding an acid, a base or the like such that the reaction mixture, which has been obtained after the hydrolysis reaction and contains the cross-linked polyaspartic acid resin, has a desired pH (for example, pH 7). By this neutralization treatment, the percentage (neutralization degree) of carboxyl groups, which are contained in the form of salts in the molecule of the cross-linked polyaspartic acid resin, based on all the carboxyl groups in the same molecule can be adjusted. No particular limitation is imposed on this neutralization degree. In general, however, the carboxyl groups in the form of salts may account preferably for 0 to 95 mol.%, more preferably for 30 to 80 mol.%, both based on the total number of all aspartic acid residual groups.

No particular limitation is imposed on the manner of the neutralization treatment. It is, however, the common practice to adjust the pH by adding an acid and/or a base subsequent to the hydrolysis reaction. Specific examples of usable acids can include hydrochloric acid, hydrobromic acid, hydroiodic acid, sulfuric acid, sulfurous acid, nitric acid, nitrous acid, carbonic acid, phosphoric acid, formic acid, acetic acid, propionic acid, oxalic acid, benzoic acid, methanesulfonic acid, trifluoromethanesulfonic acid, benzenesulfonic acid, toluenesulfonic acid, and benzenephosphonic acid. On the other hand, specific examples of usable bases can include the above-described aqueous alkaline solutions.

### (ii) Drying of cross-linked polyaspartic acid resin

No particular limitation is imposed on the drying method of the cross-linked resin. Drying is conducted batchwise or continuously under environmental pressure or reduced pressure. Described specifically, the drying procedure can be conducted using at least one apparatus selected from the group consisting of material-fixed dryers, material-moving dryers, material-mixing dryers, hot-air material-moving dryers, cylindrical dryers, infrared dryers, and high-frequency dryers. Equipment and methods usable for the drying step in the present invention include those disclosed in "14. Moisture Control, Water Cooling and Drying" (pages 735-788), "7. Stirring" (pages 421-454), and "6. Heat Transfer and Evaporation" (pages 343-420) of "KAGAKU KOGAKU BINRAN (Handbook of Chemical Engineering), Revised 6^{th} Edition" (Compiled by: The Society of Chemical Engineers, Japan; Published by: MARUZEN CO., LTD.; Published in: 1999). In general, the temperature of the material during the drying procedure may range preferably from 20 to 200°C, with 50 to 120°C being more preferred. An excessively high temperature generally causes a reduction in cross-linking degree, leading to a reduction in water absorbency. An excessively low temperature, on the other hand, requires a long time for drying, leading to a need for large equipment.

The amount of the solvent (including water) still contained in the superabsorbent resin after the drying procedure is adjusted as needed depending on the application. The content of the solvent may be adjusted generally to 50 parts by weight or lower, preferably to 20 parts by weight or lower, more preferably to 10 parts by weight or lower, particularly preferably to 7 parts by weight or lower, most preferably to 5 part by weight or lower, all per 100 parts by weight of the superabsorbent resin.

To the superabsorbent resin subjected to the drying, granulation treatment, surface cross-linking treatment and/or the like may be applied further as needed.

### [Shape of the cross-linked polyaspartic acid resin]

The superabsorbent resin can be used in a preferred shape selected depending on the application, such as irregular shapes, spheres, grains, granules, granulated particles, flakes, lumps, pearls, fine powder, fibers, rods, films and sheets. It can also be in the form of a fibrous base material, a porous body, an expanded body or a granulated material.

No particular limitation is imposed on the particle size (average particle diameter) of the superabsorbent resin, although it may be preferred to adjust the particle size depending on the application. In the case of disposable diapers, for example, an average particle size of from 50 to 1,000 µm is generally preferred, with a range of from 100 to 600 µm being more preferred, because a high water absorption speed and avoidance of gel blocking are desired. When employed in a form incorporated in another resin by kneading or the like, a range of from 1 to 10 µm is generally preferred. When employed as a water-holding material for agricultural and horticultural applications or a like material, a range of from 100 µm to 5 mm is generally preferred in view of its dispersibility in soil.

### [Form of use of the cross-linked polyaspartic acid resin]

No particular limitation is imposed on the form of use of the cross-linked polyaspartic acid resin. It can be used either singly or in combination with another material.

When employed in combination with another resin, for example, the cross-linked polyaspartic acid resin can be used *inter alia* by kneading incorporating the cross-linked polyaspartic acid resin in a thermoplastic resin and forming the resultant melt by injection molding, by mixing constituent monomers of another resin, an acidic polyamino acid resin and optionally, an initiator and then conducting polymerization under light, heat or the like, by dispersing the cross-linked polyaspartic acid resin and another resin in a solvent, casting the dispersion and then removing the solvent, by mixing the cross-linked polyaspartic acid resin with a prepolymer or another resin and then conducting cross-linking, or by mixing the cross-linked polyaspartic acid resin with another resin and then conducting cross-linking.

No particular limitation is imposed on the molded or otherwise formed product of the cross-linked polyaspartic acid resin. It can be used in the form of solid matters, sheets, films, fibers, nonwoven fabrics, expanded bodies, rubber and the like. Further, no particular limitation is imposed on their molding or forming methods.

The cross-linked polyaspartic acid resin can be used either singly or in the form of a composite material combined with another material. Although no particular limitation is imposed on the structure of the composite material, it can be formed into a sandwich structure by holding it between pulp layers, nonwoven fabrics or the like; it can be formed into a multilayer structure by using a resin sheet or film as a base material; or it can be formed into a double-layer structure by casting it on a resin sheet. For example, forming of the cross-linked polyaspartic acid resin into a sheet-like shape can provide a superabsorbent sheet which may be a superabsorbent film.

Further, the cross-linked polyaspartic acid resin can also be blended with one or more other cross-linked resins as needed. It is also possible to add, as needed, inorganic compounds such as salt, colloidal silica, white carbon, ultrafine silica and titanium oxide powder; and organic compounds such as chelating agents. Moreover, it is also possible to mix oxidizing agents, antioxidants, reducing agents, ultraviolet absorbers, antibacterial agents, fungicides, mildewproofing agents, fertilizers, perfumes, deodorants, pigments and the like.

The cross-linked polyaspartic acid resin can also be used in the form of a gel or solid matter. It is used in a gel form, for example, when employed in water-holding materials for agricultural and horticultural applications, life extenders for cut flowers, gel-type aromatics, gel-type deodorants and the like; and it is used in a solid form when employed as an absorbent for disposable diapers.

### [Applications of the cross-linked polyaspartic acid resin]

No particular limitation is imposed on the applications of the cross-linked polyaspartic acid resin. It can be used in any application fields where conventional superabsorbent resins are usable.

Illustrative specific applications can include sanitary products such as disposable diapers, sanitary supplies, breast milk pads, and disposable dustcloths; medical supplies such as wound-protecting dressing materials, medical underpads, and cataplasms; daily necessaries such as pet sheets, portable toilets, gel-type aromatics, gel-type deodorants, sweat absorbing fibers, and disposable pocket heaters; toiletry products such as shampoos, hair-setting gels, and humectants; agricultural and horticultural products such as agricultural and horticultural water-holding materials, life extenders for cut flowers, floral foams (fixing bases for cut flowers), seedling nursery beds, solution culture vegetation sheets, seed tapes, fluidized seedling media, and dew-preventing agricultural sheets; food packaging materials such as freshness-retaining materials for food trays, and drip absorbent sheets; materials for use during transportation, such as cold insulators, and water absorbent sheets for use during the transportation of fresh vegetables; construction and civil engineering materials such as dew-preventing construction materials, sealing materials for civil engineering and construction, lost circulation preventives for shield tunneling, concrete admixtures, gaskets and packings; materials for electric and electronic equipment, such'as sealing materials for electronic equipment and fiber optics, waterblocking materials for communication cables, and ink jet recording papers; water treatment materials, such as sludge solidifiers, and dehydrating or water-eliminating agents for gasoline and oils; textile-printing sizing materials; water-swelling toys; artificial snow; sustained-release fertilizers; sustained-release agrichemicals; sustainedrelease drugs; humidity regulating materials; and antistatic agents.

The present invention will hereinafter be described more specifically based on Examples. It should however be borne in mind that the present invention is by no means limited by the following Examples. Determination of physical properties in the Examples was conducted by the following methods.

### [Determination of the concentration of DMF in a cross-linked resin]

The weight concentration of DMF in each cross-linked resin was determined using a pyrolysis GC (gas chromatograph) which is constructed including equipment to be described below. An analysis was conducted by rapidly heating the cross-linked resin to 300°C in a below-described pyrolyzer to have the contained solvent evaporated and then separating and quantitating the evaporated solvent by means of GC connected to the pyrolyzer. The concentration of DMF in the cross-linked resin is expressed in terms of a value based on the weight of the cross-linked resin with the solvent contained therein.
- Pyrolyzer :: "PYR-2A" (trade name; manufactured by Shimadzu Corporation)
- GC column:: "Chromosorb 103" (trade name; manufactured by Shimadzu Corporation)

### [Determination of water absorption]

Each water absorption was measured by the below-described tea bag method. The measurement of the water absorption by the tea bag method was conducted using physiological saline and distilled water as liquids to be absorbed.

About 0.02 g of a dried superabsorbent resin was placed in a tea bag made of nonwoven fabric (80 mm x 50 mm). The tea bag was immersed in the corresponding liquid (physiological saline or distilled water), in which the resin was allowed to swell for 40 minutes. The tea bag was then pulled out. After the liquid was allowed to drip down for 10 seconds, the liquid was sucked out under capillary action on 24 sheets of tissue paper which was overlaid one over the other. The weight of the tea bag with the swollen resin contained therein was measured. The above procedures were likewise repeated using, as a blank, a similar tea bag only. The weight of the blank and the weight of the superabsorbent resin were subtracted from the weight of the tea bag with the swollen polymer contained therein. A value obtained by dividing the difference with the weight of the superabsorbent resin, that is, a water absorption per unit weight of the superabsorbent resin (g/g-superabsorbent resin) was determined. Incidentally, the physiological saline was a 0.9 wt.% aqueous solution of sodium chloride.

### Example 1

A polysuccinimide (weight average molecular weight: 96,000) was dissolved in dimethylformamide (DMF), whereby a homogeneous solution A (polymer solution) having a polymer concentration of 20 wt.% was obtained. On the side, lysine monochloride (12.0 kg) was added to a 18 wt.% aqueous solution of sodium hydroxide (17.5 kg) under cooling, whereby a homogeneous solution B (cross-linking agent solution) was prepared.

A cross-linking reactor was constructed as follows: A feed line (line A) connected to a high-pressure pump A and another feed line (line B) connected to a high-pressure pump B joined each other. A mixing junction (M) was composed of a mixing section and a cross-linking reaction section, the mixing section was constructed of a static mixer (inner diameter: 3.4 mm, 17 elements), and the cross-linking reaction section was constructed of a multi-tube tubular reactor lined with a fluorinated resin (PTFE) (inner diameter: 10 mm). The cross-linking reaction product, i.e., the cross-linked polymer was continuously discharged and collected through a discharge line (line C).

Using the high-pressure pump A, the solution A (polymer solution) was supplied at a flow rate of 28 kg/hour through the associated feed line (line A), and using the high-pressure pump B, the solution B (cross-linking agent solution) was supplied at a flow rate of 3.9 kg/hour through the associated feed line (line B).

At the above-described flow rates, the residence time in the cross-linking reactor (internal temperature: 45°C) was 8 minutes, and through the discharge line (line C), a gel was continuously discharged in the form of noodles (diameter: approximately 10 mm). By a chopping machine additionally arranged at an outlet of the discharge line (line C), the noodle-like gel was chopped so that a granular gel was continuously produced. After operated for 90 minutes, sampling was conducted for 5 minutes. The sampled granular gel (a cross-linked polysuccinimide with the solvent contained therein; 2.7 kg) was formed into a slurry in a solvent (50 wt.% water + 50 wt.% methanol) . Hydrolysis was then conducted while controlling the slurry at pH 11 to 12 by adding dropwise a 15 wt.% aqueous solution of sodium hydroxide under stirring. In the course of that hydrolysis, the viscosity began to rise. The procedure was therefore conducted while adding methanol as needed. Upon an elapsed time of 12 hours, the reaction mixture was neutralized to pH 7 with a 7% aqueous solution of hydrochloric acid.

Methanol was thereafter added into the system, whereby the resultant cross-linked polyaspartate salt was caused to precipitate. The solvent was removed by decantation, and with a mixed solvent of water and methanol, the cross-linked polyaspartate salt was caused to swell again and was formed into a slurry. After those procedures were repeated three times, reprecipitation was conducted in anhydrous methanol. The cross-linked polyaspartate salt was then recovered in the form of a granular solid.

The recovered solid was dried for 24 hours in a nitrogen gas stream dryer the temperature of which was set at 60°C, whereby the cross-linked polyaspartate salt (635 g) was obtained. The cross-linked polyaspartate salt was ground by using a dry grinder and was then subjected to dry classification, whereby a powder the particle size range of which was from 100 to 500 µm was recovered. With respect to that powder, the water absorption was measured. The following results were obtained.

### <Water absorption>

Water absorption for distilled water:
   540 g/g-superabsorbent resin
Water absorption for physiological saline:
   60 g/g-superabsorbent resin

### Example 2

Sampling was conducted by repeating the procedures of Example 1 likewise except that a polysuccinimide having a weight average molecular weight of 110,000 was used.

An 800-gram aliquot of a sampled granular gel (a cross-linked polysuccinimide with the solvent contained therein; maximum grain diameter: less than 5 mm) was charged into a flask. Methanol (300 g) was next charged as an extraction solvent, and under conditions of 60°C and 0.1 MPa, the methanol was stirred together with the granular gel to conduct an extraction procedure. After the extraction procedure was initiated, the granular gel was caused to shrink into a solid form and thereafter, was gradually divided into smaller particles. Subsequent to stirring for 2 hours under the above-described conditions, the resultant mixture was cooled and filtered so that the mixture was separated into an extract and a cross-linked polymer. Upon filtration, the filter cake was washed using methanol (50 g).

With respect to the cross-linked polymer, similar procedures were repeated further three times except that the amount of methanol as an extraction solvent was changed to 210 g. The cross-linked polymer was then dried in a vacuum at 40°C, whereby the cross-linked polymer was obtained in a dry form (175 g).

A pyrolysis GC analysis was conducted on the cross-linked polymer. The concentration of DMF in the cross-linked polymer was determined to be 1.5 wt.%.

Further, the cross-linked polymer was repeatedly subjected to hydrolysis in a similar manner as in Example 1 except that the hydrolyzing time was changed to 4 hours, whereby a cross-linked polyaspartate salt (196 g) was obtained. The cross-linked polyaspartate salt was ground by using a dry grinder and was then subjected to dry classification, whereby a powder the particle size range of which was from 100 to 500 µm was recovered. With respect to that powder, the water absorption was measured. The following results were obtained.

### <Water absorption>

Water absorption for distilled water:
   590 g/g-superabsorbent resin
Water absorption for physiological saline:
   66 g/g-superabsorbent resin

### Example 3

Sampling was conducted by repeating the procedures of Example 1 likewise except that the polysuccinimide having the weight average molecular weight of 110,000 was used.

An 800-gram aliquot of a sampled granular gel (a cross-linked polysuccinimide with the solvent contained therein; maximum grain diameter: less than 5 mm) was charged in a flask. Methanol (300 g) was next charged as an extraction solvent, and under conditions of 60°C and 0.1 MPa, the methanol was stirred together with the granular gel to conduct an extraction procedure. After the extraction procedure was initiated, the granular gel was caused to shrink into a solid form and thereafter, was gradually divided into smaller particles. Subsequent to stirring for 2 hours under the above-described conditions, the resultant mixture was cooled and filtered so that the mixture was separated into an extract and a cross-linked polymer. Upon filtration, the filter cake was washed using methanol (50 g).

The cross-linked polymer was charged into a flask, and under stirring, vacuum drying was conducted at 40°C, whereby the cross-linked polymer was obtained in a dry form. The cross-linked polymer was then heated to 100°C, at which vacuum drying was conduced for 3 hours at 1 mmHg (0.00013 MPa).

A pyrolysis GC analysis was conducted on the cross-linked polymer. The concentration of DMF in the cross-linked polymer was determined to be 3.6 wt.%.

Further, the cross-linked polymer was repeatedly subjected to a similar hydrolysis procedure as in Example 1, whereby a cross-linked polyaspartate salt (198 g) was obtained. The cross-linked polyaspartate salt was ground by using a dry grinder and was then subjected to dry classification, whereby a powder the particle size range of which was from 100 to 500 µm was recovered. With respect to that powder, the water absorption was measured. The following results were obtained.

### <Water absorption>

Water absorption for distilled water:
   510 g/g-superabsorbent resin
Water absorption for physiological saline:
   52 g/g-superabsorbent resin

### Example 4

Hexanediamine as a cross-linking agent was dissolved in dimethylformamide (DMF), whereby a cross-linking agent solution B with hexanediamine contained at a concentration of 20 wt.% therein was prepared. On the side, the polysuccinimide (weight average molecular weight: 110,000) was dissolved in DMF by using a horizontal kneader, whereby a homogeneous solution A (polymer solution) having a polymer concentration of 35 wt.% was obtained.

As the apparatus provided with the feed line (line A), the feed line (line B), the mixing junction (M) and the discharge line (line C), a horizontal twin-shaft kneading reactor (D = 40 mm, L/D = 33) was in this Example.

The solution A (polymer solution) was continuously supplied at 14 kg/hour into the horizontal twin-shaft kneading reactor, in which the solution A (polymer solution) was continuously mixed with the crosslinking agent solution B continuously supplied at 0.60 kg/hour such that a continuous cross-linking reaction was conducted at 50°C (residence time in the reactor: approximately 4 minutes). The horizontal twin-screw kneading reactor was provided at a die portion of an outlet thereof with five discharge orifices of about 4 mm in diameter. Through those discharge orifices, the cross-linked polymer was continuously discharged as a viscous rod-shaped gel.

Under the above-described steady operation, sampling was conducted. A 500-gram aliquot of a sampled cross-lined polymer (a cross-linked polysuccinimide with the solvent contained therein) was charged into a flask. Methanol (300 g) was next charged as an extraction solvent, and under conditions of 60°C and 0.1 MPa, stirring was performed to conduct an extraction procedure. After the extraction procedure was initiated, the cross-linked polymer was caused to shrink into a solid form and thereafter, was gradually divided into smaller particles. Subsequent to stirring for 2 hours under the above-described conditions, the resultant mixture was cooled and filtered so that the mixture was separated into an extract and a cross-linked polymer. Upon filtration, the filter cake was washed using methanol (50 g).

With respect to the cross-linked polymer, similar procedures were repeated further three times except that the amount of methanol as an extraction solvent was changed to 250 g. The cross-linked polymer was then dried in a vacuum at 40°C, whereby the cross-linked polymer was obtained in a dry form (208 g).

A pyrolysis GC analysis was conducted on the cross-linked polymer. The concentration of DMF in the cross-linked polymer was determined to be 1 wt.%.

Further, the cross-linked polymer was repeatedly subjected to hydrolysis in a similar manner as in Example 1 except that the hydrolyzing time was changed to 8 hours, whereby a cross-linked polyaspartate salt (266 g) was obtained. The cross-linked polyaspartate salt was 'ground by using a dry grinder and was then subjected to dry classification, whereby a powder the particle size range of which was from 100 to 500 µm was recovered. With respect to that powder, the water absorption was measured. The following results were obtained.

### <Water absorption>

Water absorption for distilled water:
   690 g/g-superabsorbent resin
Water absorption for physiological saline:
   71 g/g-superabsorbent resin

### Comparative Example 1

The polysuccinimide (weight average molecular weight: 96,000; 10 g) was dissolved in dimethylformamide (DMF; 40 g), whereby a homogeneous solution A (polymer solution) having a polymer concentration of 20 wt.% was obtained. On the side, lysine monochloride (2.8 g) was added to a liquid mixture consisting of distilled water (3.4 g) and a 25% aqueous solution of sodium hydroxide (0.74 g), whereby a homogeneous solution B (cross-linking agent solution) was prepared.

The solution A (polymer solution) was placed in a glass-made reactor (200-mL) and then stirred at 500 rpm. Ten (10) minutes later, the solution B (crosslinking agent solution) was added dropwise into the reactor over 30 seconds such that the'solution B was mixed with the solution A.

The viscosity of the reaction mixture inside the reactor increased with time. Upon an elapsed time of about 2 minutes subsequent to the initiation of the dropwise addition of the solution B, the resulting gel wound on and around a stirring blade, and no further stirring was feasible. In addition, the gel stuck on the stirring blade and in the reactor. It was extremely difficult to remove the gel.

### [Comparison between Examples 1-4 and Comparative Example 1, and Discussion]

In Comparative Example 1, bulky gelation took place during the cross-linking reaction, and the productivity was extremely low. In contrast, it was possible to continuously produce in each of Examples 1-4 the cross-linked polyaspartic acid, which is capable of exhibiting high water absorption, with high productivity.

Further, in each of Example 2 and Example 4, the cross-linked polymer was obtained with the residual concentration of DMF, a crosslinking reaction solvent, significantly lowered owing to the extraction procedure making use of methanol as an extracting solvent. With respect to those cross-linked polymers, it has also been confirmed that their crosslinking procedures can be conducted in still shorter time than the crosslinking procedure in Example 1. In Example 2, the combination of the extraction procedure making use of methanol as an extracting solvent and the drying procedure made it possible to obtain the cross-linked polymer with the significantly-lowered residual concentration of DMF as a crosslinking reaction solvent.

According to the present invention, cross-linked polymers which show high water absorption can be continuously produced with high productivity as is appreciated from the foregoing.

## Claims

1. A continuous production process for a cross-linked polymer, including mixing an uncross-linked polymer and a cross-linking agent together and conducting a cross-linking reaction, which comprises the following steps: continuously mixing said uncross-linked polymer, which has been fed in a liquid form through a feed line (line A), and said cross-linking agent, which has been fed in a liquid form through another feed line (line B), together at a mixing junction (M) such that said uncross-linked polymer is allowed to continuously undergo said cross-linking reaction; and continuously discharging and collecting the resulting cross-linking reaction product as said cross-linked polymer through a discharge line (line C).

2. A continuous production process according to claim 1, wherein said uncross-linked polymer is a hydrophilic polymer.

3. A continuous production process according to claim 2, wherein said hydrophilic polymer is a water-soluble polymer.

4. A continuous production process according to claim 1, wherein said uncross-linked polymer is a superabsorbent polymer and/or a superabsorbent polymer precursor.

5. A continuous production process according to claim 1, wherein said uncross-linked polymer is an uncross-linked polyamino acid derivative.

6. A continuous production process according to claim 5, wherein said uncross-linked polyamino acid derivative is a uncross-linked polysuccinimide.

7. A continuous production process according to claim 1, wherein said cross-linked polymer is' a hydrophilic cross-linked polymer.

8. A continuous production process according to claim 7, wherein said hydrophilic cross-linked polymer is a water-insoluble polymer.

9. A continuous production process according to claim 7, wherein said hydrophilic cross-linked polymer is a superabsorbent polymer and/or a superabsorbent polymer precursor.

10. A continuous production process according to claim 9, wherein said superabsorbent polymer precursor is a cross-linked polysuccinimide, and said superabsorbent polymer is a cross-linked polyaspartic acid.

11. A continuous production process according to claim 1, wherein'said cross-linked polymer is a cross-linked polyamino acid derivative.

12. A continuous production process according to claim 11, wherein said crosslinked polyamino acid derivative is a cross-linked polysuccinimide and/or a cross-linked polyaspartic acid.

13. A continuous production process according to claim 1, wherein said cross-linking agent comprises a polyamine.

14. A continuous production process according to claim 13, wherein said polyamine is lysine.

15. A continuous production process according to claim 1, wherein said mixing junction (M) comprises a mixing section and a cross-linking reaction section, said uncross-linked polymer in said liquid form and said cross-linking agent in said liquid form are continuously mixed in said mixing section, and said uncross-linked polymer in said liquid form and said cross-linking agent in said liquid form are continuously subjected to said cross-linking reaction.

16. A cross-linked polymer produced by a process as defined in claim 1.

17. A continuous production apparatus for a cross-linked polymer, which comprises a feed line (line A) for feeding an uncross-linked polymer in a liquid form, another feed line (line B) for feeding a cross-linking agent in a liquid form, a mixing junction (M) and a discharge line (line C) for discharging said cross-linked polymer, wherein said mixing junction has a function to continuously mix said uncross-linked polymer, which has been fed in said liquid form through said feed line (line A), and said cross-linking agent, which has been fed in said liquid form through said another feed line (line B), together such that a cross-linking reaction is continuously conducted, and said discharge line (line C) has a function to continuously discharge and collect the resulting cross-linking reaction product as said cross-linked polymer.

18. A production process for a cross-linked polyaspartic acid resin, which comprises the following steps: (1) producing a cross-linked polysuccinimide by a process as defined in claim 1; and (2) then subjecting at least a part of imide rings in molecules of said cross-linked polysuccinimide to a hydrolysis reaction continuously or batchwise to produce said cross-linked polyaspartic acid resin.

19. A production process according to claim 18, further comprising, between said step (1) and said step (2), the following step: (1') isolating said cross-linked polysuccinimide, which has been produced in step (1), continuously or batchwise.

20. A production process according to claim 19, wherein said hydrolysis reaction is conducted at pH 7.5 to pH 14.0.

21. A cross-linked polyaspartic acid resin produced by a process as defined in claim 18.
